# EUROPEAN PATENT APPLICATION

(11) **EP 2 457 442 A1**
(43) Date of publication of application: **30.05.2012**
(21) Application number: 12000094.8
(22) Date of filing: 26.08.2009
(51) Int. Cl.: A01N 33/12, A01N 25/30, A01N 37/44, A01N 31/02, A01N 37/36

(54) **Potentiated biocidal compositions and methods of use**

(30) Priority: 27.08.2008 US 9211908 P
(62) Divisional of application: 09791950.0
(71) Applicant: STEPAN COMPANY, Northfield, Illinois 60093 (US)
(72) Inventor: Callahan, Molly, Ryan, Winnetka Illinois 60093 (US); Shelton, David, Palatine Illinois 60067 (US)
(74) Representative: Schnappauf, Georg

(57) **Abstract**

The present technology relates to biocidal compositions and methods that contain and utilize at least one biocidal agent and at least one potentiator system wherein the resultant combination has an enhanced biocidal efficacy. The present technology also discloses a rapid screening assay for determining biocidal compositions with enhanced efficacy, e.g., a microbial contact kill time of 5 minutes or less. Further, the present technology provides a method of determining biocidally effective concentrations of biocidal compositions comprising at least one biocidal agent and at least one potentiator system.

## Description

### CROSS REFERENCE TO RELATED APPLICATIONS

This patent application makes reference to, claims priority to and claims benefit from United States Provisional Patent Application Serial No. 61/092,119 filed on August 27, 2008.

### BACKGROUND OF THE INVENTION

Biocidal compositions, which may be, for example, germicides, antimicrobial or antibacterial blends, are widely used in different industries, hospitals and institutions as well as in consumers' daily lives to inhibit or kill various microorganisms including, bacteria, viruses, or other susceptible pathogenic agents (collectively "biocidal targets"). Common classes of biocidal agents include, for example, chlorine and chlorine compounds, iodine and iodine compounds, peroxygen compounds, alcohols, phenolics and quaternary ammonium compounds.

A variety of quaternary ammonium compounds or "quats", have been widely used since their introduction as germicides in 1935. The use of quats in disinfectant products remains popular primarily because of their relatively broad range of biocidal activity, stability over a large pH range, low toxicity, and low cost.

The Environmental Protection Agency (EPA) tests biocidal compositions using an AOAC (Association of Analytical Communities) Use Dilution Test (UDT) to determine if a biocidal composition has the disinfectant efficacy claimed. Further, the UDT is not quantitative; it is probability based requiring a composition to fulfill a 10 minute contact kill time requirement only if the test formulation passes with at least 59 out of 60 UDT test samples showing no growth for a particular biocidal target. 59 or 60 out of 60 test samples showing no growth ensures a statistical significance of greater than 95% that the test composition will eradicate the bacteria of the inoculum. In other words, there is no measure of how efficient the test formulation is at killing a particular target. The UDT test is also both a laborious and slow process. To test a single formulation, the basic testing time requires about 8 hours of preparation, about 4 hours of execution and about 48 hours of incubation before a result is provided, therefore requiring at least 3 days before results may be analyzed. The long readout time and laborious process hinders the ability to screen large numbers of test formulations to identify formulations with beneficial properties, e.g., a decreased kill time. To this end, a rapid screening assay (RSA) to provide a high-throughput and quantitative measure of the % kill of a test biocidal composition under different conditions, including a shortened 5 minute contact time has been surprisingly found and is further described herein as one aspect of the presently disclosed and claimed technology.

The industrial standard microbial contact kill time as determined by the EPA-approved Use Dilution test (UDT) for a bucket dilutable composition for major biocidal targets, e.g. *Staphylococcus aureus, Salmonella enterica, Pseudomonas aeruginosa,* etc., is 10 minutes. For a bucket dilutable disinfectant composition to claim disinfectancy of hard surfaces, the composition must pass the 10 minute contact kill time. There is still a strong need and unforeseeable solution in the art for quaternary based biocidal compositions that provide shorter contact times (i.e., faster rates of kill, e.g. 5 minutes or less), a broader spectrum of activity, a better environmental profile, and/or a wider range of applications (e.g., hard surface disinfectants). There is especially a need for more efficacious biocidal products in the disinfectant field to reduce the kill time for problematic biocidal targets in hospital settings, e.g. *Staphylococcus aureus,* and *Pseudomonas aeruginosa,* to provide shorter contact times and thus reduce the likelihood of creating superbugs or bacteria resistant to disinfectants.

The present technology generally relates to one or more biocidal compositions and methods that contain or utilize one or more biocidal agents such as a quaternary ammonium compound (often referred to as a "quat") or a blend of quaternary ammonium compounds (often referred to as a blend of "quats") and a potentiator system with improved biocidal efficacies, for example, less than 10 minute microbial contact kill time, preferably a 5 minute or less microbial contact kill time. Neither the potentiator system nor the biocidal agent alone provides improved biocidal efficacies, e.g., the decreased contact kill time. The potentiator system includes at least one potentiator, for example, at least one surfactant, solvent, chelating agent, and/or pH buffering agent. The biocidal composition can be, for example, an antimicrobial, an antifungal, an antibacterial disinfectant composition, or combinations thereof.

The present technology also provides a quantitative method of determining a percent kill for at least one biocidal target for at least one biocidal composition or a combination of biocidal compositions. The present technology further provides a method of determining the concentration of the potentiator system used with a biocidal agent to provide an increased biocidal property to the biocidal agent.

### BRIEF SUMMARY OF THE INVENTION

The presently described technology relates, in general, to biocidal compositions and methods that contain or utilize at least one biocidal agent and at least one potentiator system wherein the resultant combination has an enhanced biocidal efficacy and reduced contact kill time. Efficacy can be demonstrated as increased potency, spectrum of activity, and improved contact kill time. In some embodiments, the biocidal agent and the potentiator system are provided in synergistically effective amounts. The potentiator system comprises at least one potentiator. The at least one potentiator can include at least one surfactant, at least one solvent, at least one chelating agent, at least one pH buffering agent, or a combination thereof. The resulting biocidal compositions or methods exhibit an enhanced efficacy which can be demonstrated by an accelerated rate of kill of the biocidal target or an increased efficacy of the biocidal agent for a broader spectrum of biocidal targets. Both dilutable concentrate and ready-to-use (RTU) biocidal products are envisioned within the scope, spirit and practice of the present technology.

In one aspect, the present technology provides a biocidal composition having an effective amount of at least one biocidal agent and an effective amount of at least one potentiator system. The biocidal agent preferably comprises at least one quaternary ammonium compound. The potentiator system provides an effective amount of at least one potentiator or a combination of potentiators that when added to the at least one biocidal agent increases the effectiveness of that biocidal agent(s). The biocidal agent and the potentiator system have a synergistic effect. The at least one potentiator includes at least one surfactant, solvent, chelating agent, pH buffering agent or a combination thereof. The biocidal composition can be provided, for example, as a solid, a powder, a gel, a suspension, a slurry, or other liquid form, and can be for example, a dilutable concentrate or a ready-to-use product. The dilutable concentrate biocidal composition can be formulated for making different ratios of dilutions, e.g., 1:256, 1:128, 1:100, 1:64, 1:32, 1:16, 1:10, among several others.

In yet another aspect, the presently described technology provides one or more methods of making a biocidal composition in liquid form having a microbial contact kill time of 5 minutes or less comprising the steps of: adding at least one diluent into a container; adding an effective amount of at least one biocidal agent into the container; adding an effective amount of at least one potentiator system into the container and mixing the contents of the container. The method can further include adding the potentiator system one potentiator at a time, or as a mixture of multiple potentiators.

In another aspect, the presently described technology provides a 1:128 dilutable composition including about 5.0% to about 15.0% by weight of at least one quaternary ammonium compound, about 1.0% to about 15% by weight of at least one solvent, about 0.1% to about 10.0% by weight of at least one chelating agent, and about 0.5% to about 9% by weight of at least one surfactant by weight of the dilutable composition. The dilutable composition can further comprise about 0.01% to about 1.0% by weight of at least one pH buffering agent based on the total weight of the dilutable composition.

In yet a further aspect, the presently described technology provides a method of destroying, inhibiting or eliminating growth of at least one biocidal target on at least one type of surface. For example, the method includes applying a biocidal composition to a surface or a substrate for a contact time sufficient to destroy, kill, inhibit, reduce, or eliminate at least one biocidal target. The sufficient time is preferably less than about 10 minutes, more suitably less than about 5 minutes, alternatively between about 2 to about 5 minutes.

In another aspect, the presently described technology provides a method of determining the percent kill of at least one biocidal composition for at least one biocidal target at a specific contact time. The method includes the steps of adding at least one biocidal composition, adding at least one biocidal target to form a mixture and incubating the mixture for a sufficient contact time. A sufficient amount of at least one viability agent is added to the mixture to measure the amount of viable biocidal target in the mixture. As a result, the amount of viable biocidal target in the mixture is quantitatively measured. Then, the amount of viable biocidal target is compared with an untreated control or controls to determine the percent kill of one or more biocidal agents.

In another aspect, the presently described technology provides a method of determining one or more biocidal composition's biological effectiveness against one or more biocidal targets. The method includes providing at least one biocidal composition comprising at least one biocidal agent and at least one inert compound, adding at least one biocidal target to the biocidal composition to form a biocidal mixture, incubating the biocidal mixture for a sufficient incubation time and adding a sufficient quantity of at least one viability agent. The method further comprises quantitatively measuring the amount of viable biocidal target in the biocidal mixture and comparing the quantitative measurement of the biocidal mixture with an untreated control to determine the biocidal efficacy of the biocidal composition against the one or more biocidal targets. The biocidal targets can be, for example, a bacterium, virus, or fungus. The sufficient incubation time can be less than about 10 minutes, more suitably about 5 minutes or less.

In yet a further aspect, the presently described technology provides a method of determining an effective amount of a potentiator system for inclusion in a biocidal composition having a microbial contact kill time of 5 minutes or less for at least one biocidal target. The method includes providing at least one potentiator system having at least one potentiator agent and at least one carrier agent and at least one biocidal agent. A first concentration of the potentiator system is combined with the biocidal agent to form a first mixture and separately, a second concentration of the potentiator system is combined with the biocidal agent to form a second mixture. The method further includes quantitatively determining at least one percent kill amount of the first mixture and at least one percent kill amount of the second mixture. The method further includes comparing the percent kill amounts of the first and second mixtures to determine one or more concentrations of the potentiator system to be combined with the biocidal agent to form a biocidal composition effective to provide a microbial contact kill time of 5 minutes or less for at lest one biocidal target.

This invention relates, in particular, to the following:
1. A biocidal composition comprising a biocidally effective amount of
   at least one biocidal agent, and
   at least one potentiatior system,
   wherein the biocidal agent and the potentiator system in combination have a microbial contact kill time of less than about 10 minutes for at least one biocidal target.
2. The biocidal composition of item 1, wherein the biocidal composition has a microbial contact kill time of about 5 minutes or less.
3. The biocidal composition of item 1, wherein the potentiator system comprises at least one potentiator and at least one suitable carrier.
4. The biocidal composition of item 1, wherein the potentiator system comprises at least two potentiators and at least one suitable carrier.
5. The biocidal composition of item 3, wherein the at least one potentiator comprises at least one member selected from the group consisting of at least one surfactant, solvent, chelating agent, pH buffering agent, stabilizer, and combinations thereof.
6. The biocidal composition of item 5, wherein the surfactant is at least one non-ionic surfactant, cationic surfactant, zwitterionic surfactant, amphoteric surfactant, or a combination thereof.
7. The biocidal composition of item 6, wherein the surfactant is an alcohol ethyoxylate.
8. The biocidal composition of item 1, wherein the biocidal composition comprises about 1 ppm to about 1500 ppm of at least one surfactant based on the total end use concentration of the biocidal composition.
9. The biocidal composition of item 3, wherein the at least one potentiator system further comprises at least one solvent.
10. The biocidal composition of item 9, wherein the solvent is propylene glycol n-propyl ether or ethylene glycol butyl ether.
11. The biocidal composition of item 10, wherein the solvent comprises about 1 ppm to about 1000 ppm of the total end use concentration of the biocidal composition.
12. The biocidal composition of item 3, wherein the at least one potentiator system further comprises at least one chelating agent.
13. The biocidal composition of item 12, wherein the chelating agent is at least one member selected from the group consisting of EDTA, EGTA, and combinations thereof.
14. The biocidal composition of item 12, wherein the chelating agent comprises about 10 ppm to about 1000 ppm of the total end use concentration of the biocidal composition.
15. The biocidal composition of item 3, wherein the at least one potentiator system further comprises at least one pH buffering agent.
16. The biocidal composition of item 15, wherein the pH of the biocidal composition is between about 7 to about 13.
17. The biocidal composition of item 15, wherein the pH buffering agent comprises at least one inorganic acid.
18. The biocidal composition of item 15, wherein the pH buffering agent is a member selected from the group consisting of carboxylic acids, lactic acid, citric acid, and combinations thereof.
19. The biocidal composition of item 15, wherein the pH buffering agent comprises about 1 ppm to about 100 ppm of the ending concentration of the biocidal composition.
20. The biocidal composition of item 1, wherein the potentiator system comprises about 1 ppm to about 150 ppm of at least one surfactant, about 1 ppm to about 1000 ppm of at least one chelating agent, and about 10 ppm to about 1000 ppm of at least one solvent of the ending concentration of the biocidal composition.
21. The biocidal composition of item 20, wherein the potentiator system further comprises about 1ppm to about 100 ppm of at least one pH buffering agent based on the ending concentration of the biocidal composition.
22. The biocidal composition of any one of items 1-21, wherein the biocidal composition is a ready-to-use composition.
23. The biocidal composition of any one of items 1-21, wherein the biocidal composition is a dilutable composition diluted in at least one diluent.
24. The biocidal composition of item 23, wherein the dilutable composition is diluted at a ratio of 1:10, 1:32, 1:64, 1:100, 1:128, or 1:256.
25. The composition of item 23, wherein the dilutable composition is diluted at a ratio of 1:128.
26. The composition of item 23, wherein the dilutable composition has a microbial contact kill time of about 5 minutes or less.
27. The composition of item 23, wherein the dilutable composition has a microbial contact kill time of about 1 minutes or less.
28. The biocidal composition of item 1, wherein the biocidal composition comprises a dilutable composition able to be diluted in at least one diluent.
29. The biocidal composition of item 28, wherein the dilutable composition is diluted at a ratio of 1:10, 1:32, 1:64, 1:100, 1:128, or 1:256
30. The dilutable composition of item 28, wherein the potentiator system further comprises at least one potentiator and at least one carrier.
31. The biocidal composition of item 30, wherein the at least one potentiator comprises a member selected from the group consisting of at least one surfactant, solvent, chelating agent, pH buffering agent, stabilizer, and combination thereof.
32. The biocidal composition of item 31, wherein the at least one surfactant comprises at least one non-ionic surfactant, cationic surfactant, zwitterionic surfactant, amphoteric surfactant, or combination thereof.
33. The biocidal composition of item 32, wherein the at least one surfactant comprises an alcohol ethoxylate.
34. The biocidal composition of item 31, wherein the at least one surfactant comprises about 0.01% to about 2% by weight of the total composition of the dilutable composition.
35. The biocidal composition of item 31, wherein the solvent is a member selected from the group consisting of propylene glycol n-propyl ether, non-ionic alkylethoxylate, and alkyl polygycosides.
36. The biocidal composition of item 35, wherein the solvent comprises about 1.0% to about 15% by weight of the dilutable biocidal composition.
37. The biocidal composition of item 31, wherein the chelating agent is a member selected from the group consisting of EDTA, EGTA, and a combination thereof.
38. The biocidal composition of item 37, wherein the chelating agent comprises about 0.01 % to about 10% by weight of the dilutable biocidal composition.
39. The biocidal composition of item 30, wherein the at least one potentiator further comprises a pH buffering agent.
40. The biocidal composition of item 39, wherein the pH of the biocidal composition is between about 8 to about 12.
41. The biocidal composition of item 39, wherein the pH of the dilutable composition is about 9 or greater.
42. The dilutable composition of item 39, wherein a pH of the dilutable composition is about 11 or greater.
43. The biocidal composition of item 39, wherein the pH buffering agent is a member selected from the group consisting of lactic acid, citric acid, and combinations thereof.
44. The biocidal composition of item 39, wherein the pH buffering agent is lactic acid.
45. The biocidal composition of item 35, wherein the pH buffering agent is about 0.01 % to about 1 % by weight of the biocidal dilutable composition.
46. The biocidal composition of item 30, wherein the at least one potentiator system comprises about 0.5% to about 9% by weight of at least one surfactant, about 0.1% to about 10% by weight of at least one chelating agent, and about 1.0% to about 15.0% by weight of at least one solvent based upon the total weight of a 1:128 dilutable composition.
47. The biocidal composition of item 46, further comprising about 0.01% to about 1.0% by weight of at least one pH buffering agent.
48. The biocidal composition of item 28, wherein the diluent is hard water, soft water, distilled water, de-ionized water, or combinations thereof.
49. The biocidal composition of item 1, wherein the at least one biocidal target comprises at least one bacterium, virus, fungus, biofilm, dust mite, mycobacterium, protozoa or worm.
50. The biocidal composition of item 49, wherein the at least one bacterium comprises a gram negative or a gram positive bacteria.
51. The biocidal composition of item 49, wherein the at least one bacterium is a member selected from the group consisting of *Campylobacter jejuni, Pseudomonas aeruginosa, Salmonella enterica, Mycobacterium tuberculosis, Staphylococcus aureus, Streptococcus pyogenes,* or *Clostridium difficile.*
52. The biocidal composition of item 49, wherein the at least one bacterium comprises *Staphylococcus aureus.*
53. The biocidal composition of item 49, wherein the at least one bacterium comprises *Pseudomonas aeruginos.*
54. The biocidal composition of item 49, wherein the at least one bacterium comprises *Salmonella enterica.*
55. The biocidal composition of item 49, wherein the at least one bacterium comprises *Salmonella enterica, Pseudomonas aeruginos,* and *Staphylococcus aureus.*
56. The biocidal composition of item 49, wherein the at least one fungus comprises Candida oblicans, or A. niger.
57. The biocidal composition of item 49, wherein the at least one virus comprises at least one enveloped virus.
58. The composition of any of items 1, wherein the at least one biocidal agent comprises at least one quaternary ammonium compound.
59. The composition of item 58, wherein the at least one quaternary ammonium compound is a member selected from the group consisting of alkyl dimethyl benzyl ammonium chloride (ABDAC); dialkyldimethyl ammonium chloride (DDAC); n-alkyl dimethyl benzyl ammonium chloride; alkyl dimethyl benzyl ammonium saccharinate; and combinations thereof.
60. A dilutable composition comprising a biocidally effective amount of
   at least one biocidal agent;
   at least one potentiator system; and
   wherein the biocidal agent and the potentiator system in combination have an effective microbial contact kill time of 5 minutes or less for at least one biocidal target when diluted in at least one diluent at a ratio of 1:10 or greater.
61. The dilutable composition of item 60, wherein the biocidal agent and the potentiator system have a synergistic effect.
62. The dilutable composition of item 60, wherein the dilutable composition can be diluted 1:256, 1:128, 1:100, 1:64, 1:32 or 1:10.
63. The dilutable composition of item 60, wherein the dilutable composition is diluted 1:128.
64. The dilutable composition of item 60, wherein the potentiator system comprises at least one potentiator and a suitable carrier.
65. The dilutable composition of item 64, wherein the at least one potentiator is selected from the group consisting of at least one surfactant, solvent, chelating agent, pH buffering agent, stabilizer, and combinations thereof.
66. The composition of any of items 60-65, wherein the at least one biocidal agent comprises at least one quaternary ammonium compound.
67. The composition of item 60, wherein the at least one quaternary ammonium compound is a member selected from the group consisting alkyl dimethyl benzyl ammonium chloride (ABDAC); dialkyldimethyl ammonium chloride (DDAC); n-alkyl dimethyl benzyl ammonium chloride; alkyl dimethyl benzyl ammonium saccharinate; and combinations thereof.
68. A 1:128 dilutable composition comprising:
   about 5.0% to about 15.0% by weight of at least one quaternary ammonium compound;
   about 1.0% to about 15.0% by weight of at least one solvent;
   about 0.1% to about 10.0% by weight of at least one chelating agent;
      and
   about 0.5% to about 9% by weight of at least one surfactant based on the total weight of the dilutable composition.
69. The dilutable composition of item 68, wherein the quaternary ammonium compound comprises a blend of alkyl dimethyl benzyl ammonium chloride and dialkyldimethyl ammonium chloride.
70. The dilutable composition of item 68, wherein the quaternary ammonium compound comprises alkyl dimethyl benzyl ammonium chloride (ABDAC) and dialkyldimethyl ammonium chloride (DDAC).
71. The dilutable composition of item 68, wherein the surfactant comprises an alcohol ethoxylate.
72. The dilutable composition of item 68, wherein the chelating agent comprises ethylenediaminetetraacetic acid.
73. The dilutable composition of item 68, wherein the solvent comprises propylene glycol n-propyl ether.
74. The dilutable composition of item 68, further comprising about 0.01% to about 1.0% by weight of at least one pH buffering agent based on of the total weight of the dilutable composition.
75. The dilutable composition of item 74, wherein the pH buffering agent comprises lactic acid.
76. A 1:128 dilutable composition comprising:
   about 5.0% to about 15.0% by weight of at least one quaternary ammonium compound; and
   about 1% to about 9% by weight of at least one surfactant based on the total weight of the dilutable composition.
77. A method of making a biocidal composition comprising the steps of:
   providing at least one diluent into a container;
   adding a biocidally effective amount at least one biocidal agent; and
   adding a biocidally effective amount of at least one potentiator system,
   wherein the biocidal composition has an effective kill time of about 10 minutes or less for at least one biocidal target.
78. The method of item 77, wherein the biocidal composition has an effective kill time of about 5 minutes or less for at least one biocidal target.
79. The method of item 77, wherein the biocidal composition has an effective kill time of about 1 minutes or less for at least one biocidal target.
80. The method of item 77, wherein the potentiator system comprises at least one surfactant and at least one solvent.
81. The method of item 77, wherein the potentiator system further comprises at least one chelating agent.
82. The method of item 81, wherein the potentiator system further comprises at least one pH buffering agent.
83. The method of item 77, wherein the at least one biocidal agent is at least one quaternary ammonium compound.
84. A method of destroying, inhibiting, or eliminating the growth of at least one biocidal target comprising the steps of providing at least one biocidal composition comprising an effective amount of at least one biocidal agent and at least one potentiator system in combination to at least one surface or substrate for a sufficient contact time to destroy, inhibit or eliminate growth of the at least one microbial target.
85. The biocidal composition of any one of items 1-76, wherein the composition is to be used as a hospital disinfectant.
86. A quantitative method of determining the percent kill of a biocidal composition for a biocidal target at a specific contact time comprising the steps of:
   adding at least one biocidal composition,
   adding at least one microbial agent,
   incubating the mixture for a sufficient contact time,
   adding a sufficient amount of at least one viability agent to the mixture to measure the amount of viable biocidal target in the mixture,
   quantitatively measuring the amount of viable biocidal target in the mixture; and
   comparing the quantitative amount of the viable biocidal target with an untreated control to determine the percent kill of the biocidal composition.
87. The quantitative method of item 86, wherein the biocidal composition is a dilutable composition, further comprising, diluting the biocidal composition in a suitable diluent.
88. The quantitative method of item 87, wherein the suitable diluent comprises hard water and an organic soil load.
89. The quantitative method of item 88, wherein the hard water comprises about 400 ppm calcium.
90. The quantitative method of item 88, wherein the organic soil load comprises about 5% of the solution.
91. The quantitative method of item 86, wherein the sufficient contact time comprises from about 30 seconds or greater.
92. The quantitative method of item 86, wherein the sufficient contact time is from about 5 minutes to about 10 minutes.
93. The quantitative method of item 86, wherein the sufficient contact time is about 5 minutes.
94. The quantitative method of item 86, wherein the viability agent comprises a bioluminescent agent capable of measuring Adenosine-5'-triphosphate.
95. The quantitative method of item 86, wherein the viability agent comprises a fluorescent agent, bioluminescence agent, or dye.
96. The quantitative method of item 86, wherein the viability agent measures membrane integrity of the biocidal target cell wall.
97. The quantitative method of item 96, wherein the viability agent measures lactate dehydrogenase.
98. The quantitative method of item 86, wherein the microbial agent comprises at least one bacterium or fungus.
99. The quantitative method of item 98, wherein the bacterium comprises a gram negative or a gram positive bacterium.
100. The quantitative method of item 99, wherein the bacterium is a member selected from the group consisting of *Campylobacter jejuni, Pseudomonas aeruginosa, Salmonella enterica, Mycobacterium tuberculosis, Staphylococcus aureus, Streptococcus pyogenes,* or *Clostridium difficile.*
101. A method of determining one or more biocidal composition's biological effectiveness against one or more biocidal targets comprising the steps of: providing at least one biocidal composition comprising at least one biocidal agent and at least one inert compound;
   adding at least the biocidal target to the biocidal composition to form a biocidal mixture;
   incubating the biocidal mixture for a sufficient incubation time;
   adding a sufficient quantity of at least one viability agent; quantitatively measuring the amount of viable biocidal target in the biocidal mixture; and
   comparing the quantitative measurement of the biocidal mixture with an untreated control to determine the biocidal efficacy of the biocidal composition against the one or more microbial agents.
102. The method of item 101, wherein the microbial agent comprises a bacterium, a virus, a fungus, a biofilm, a worm, a parasite, a protozoa or a combination thereof.
103. The method of item 101, wherein the incubation period is about 1 minute or greater.
104. The method of item 101, wherein the incubation period is from about 5 minutes to about 10 minutes.
105. The method of item 101, wherein the contact time is about 5 minutes.
106. The method of item 101, wherein the biocidal agent comprises at least one quaternary ammonium compound.
107. A method of determining an effective amount of a potentiator system for inclusion in a biocidal composition having a microbial contact kill time of 5 minutes or less for at least one microbe comprising the steps of:
   providing at least one potentiator system having at least one potentiator agent and at least one carrier agent;
   providing at least one biocidal agent;
   combining a first concentration of the potentiator system with the biocidal agent to form a first mixture;
   separately combining a second concentration of the potentiator system with the biocidal agent to form a second mixture;
   quantitatively determining at least one percent kill amount of the first mixture;
   quantitatively determining at least one percent kill amount of the second mixture;
   comparing the percent kill amounts of the first and second mixtures to determine one or more concentrations of the potentiator system to be combined with the biocidal agent to form a biocidal composition effective to provide a microbial contact kill time of about 5 minutes or less for at least one microbial agent.
108. The method of item 107, wherein the at least one microbe comprises at least one bacterium, virus, fungi, mold, biofilm, dust mite, mycobacterium, protozoa, worm, or combinations thereof.
109. The method of item 108, wherein the at least one bacterium is *Pseudomonas Aeroginosa.*
110. The method of item 107, wherein the potentiator agent is a member selected from the group consisting of at least one solvent, pH buffering component, chelating component, surfactant, or combinations thereof.
111. The method of item 107, wherein the sufficient contact kill time is about 1 minute or less.
112. The method of item 107, wherein the biocidal agent is at least one member selected from the group consisting of alkyl dimethyl benzyl ammonium chloride (ABDAC); dialkyldimethyl ammonium chloride (DDAC); n-alkyl dimethyl benzyl ammonium chloride; alkyl dimethyl benzyl ammonium saccharinate; and combinations thereof.
113. The method of item 107, wherein the carrier agent is at least one member selected from the group consisting of water, glycerol, and alcohol.
114. The method of item 107, wherein the biocidal composition further comprises at least one additive.
115. The method of item 114, wherein the additive is at least one member selected from the group consisting of dyes, fragrances or preservatives.

### BRIEF DESCRIPTION OF SEVERAL VIEWS OF THE DRAWINGS

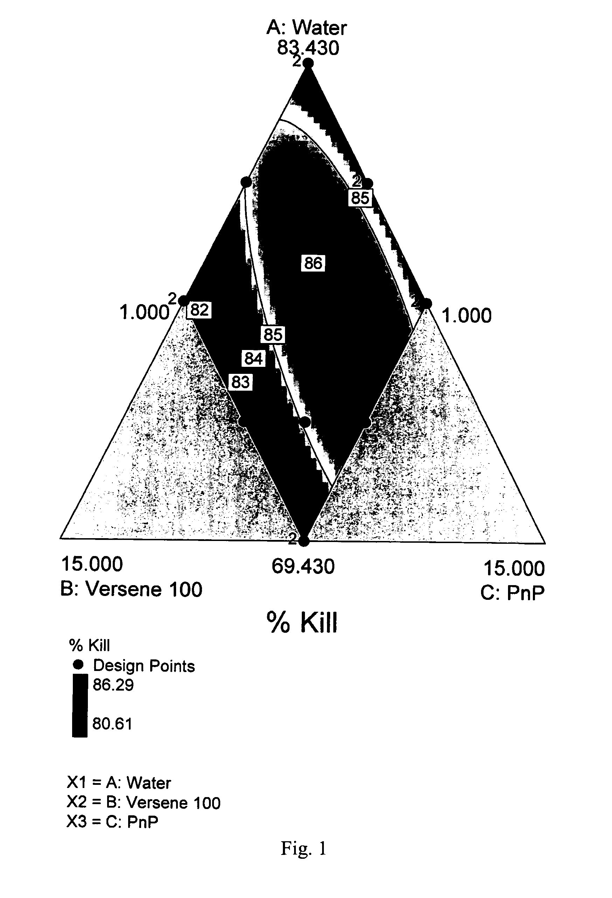

Fig. 1 is a graph depicting the predicted "hot spot" concentration combinations in an alkaline dilutable composition determined from data obtained from the rapid screening test showing the combinations having a 5 minute kill time for *pseudomonas aeruginosa* using the percent by weight of each component based on the total dilutable concentrate.

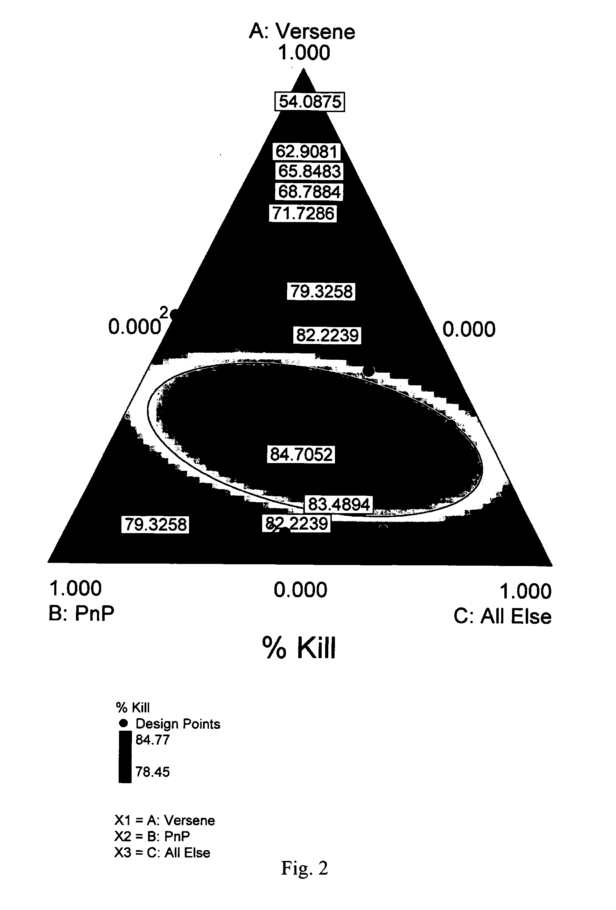

Fig. 2 is a graph depicting the predicted "hot spot" concentration combinations as shown in Fig. 1 but with normalizing the percent by weights to a scale of 0-1.

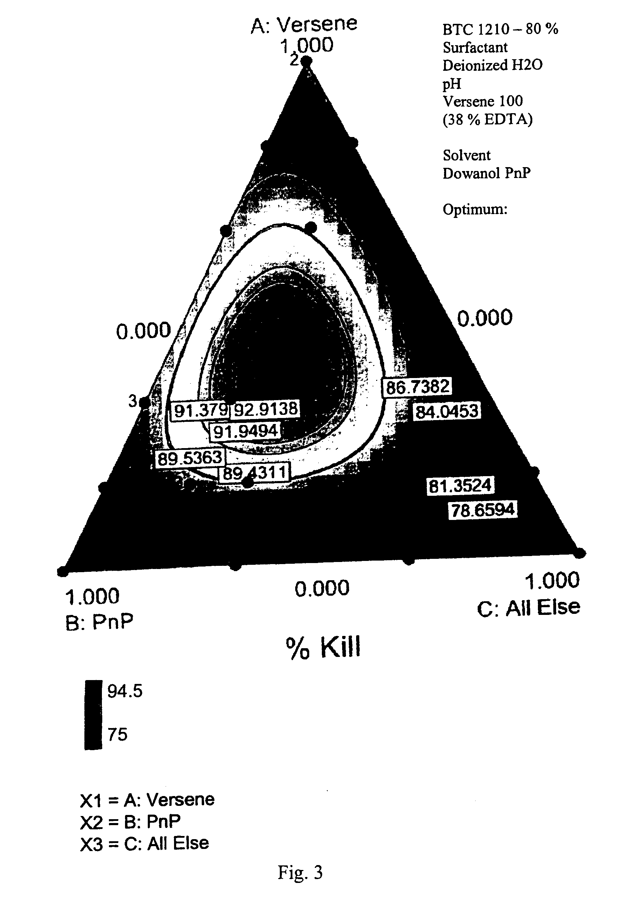

Fig. 3 is a graph depicting the predicted concentration "hot spots" in a neutral dilutable composition determined from data obtained by the rapid screening test showing the combinations having a 5 minute kill time for *pseudomonas aeruginosa* using the percent by weight of each component based on the total dilutable concentrate.

### DETAILED DESCRIPTION OF THE INVENTION

While the presently described technology will be described in connection with one or more preferred embodiments, it will be understood by those skilled in the art that the technology is not limited to only those particular embodiments. To the contrary, the presently described technology includes all alternatives, modifications, and equivalents as can be included within the spirit and scope of the appended claims.

It should be noted that, as used in the specification and the appended claims, the singular form "a," "an," and "the" include plural references unless the context clearly dictates otherwise.

As used herein, the term "biocidal" means capable of destroying, killing, neutralizing, reducing, eliminating, or inhibiting the growth of bacteria, microorganisms, germs, viruses, spores, molds, yeasts, algae, and/or other susceptible pathogenic agents; biocidal can be, for example, antimicrobial, antibacterial, germicidal, sporicidal, antiviral, disinfectant, etc.

A "ready-to-use" or "RTU" product, composition or formulation of the present technology refers to a product, composition, or formulation that is ready to be applied to articles or surfaces to be biocidally treated and/or disinfected.

A "dilutable," "concentrate," or "dilutable concentrate" product, composition, or formulation of the present technology refers to a product, composition, or formulation that needs to be diluted with a diluent (e.g., water) in a ration of, for example, 1:256, 1:128, 1:100, 1:64, 1:32, 1:16, or 1:10, among others, before it can be applied to articles, substrates, or surfaces to be biocidally treated or disinfected.

As used herein, a "diluent" or "carrier" means a liquid or solid substance, or mixture of substances, that can be used as a delivery vehicle or carrier to prepare or dilute at least one biocidal composition of the present technology. A diluent can be, for example, water, a glycol, an alcohol, another polar solvent, combinations thereof, or any other liquid or solid that does not have a negative effect on the biocidal active materials.

A "biocidal agent" is a component capable of destroying, killing, neutralizing, reducing, eliminating, or inhibiting the growth of bacteria, microorganisms, germs, viruses, spores, protozoa, molds, yeasts, algae, and/or other susceptible pathogenic agents.

"Biocidal targets" are organisms targeted to be inhibited or killed by a biocidal agent. These organisms include microorganisms including, for example, green and blue-green algae, gram negative and gram positive bacteria, enveloped and non-enveloped viruses, and fungi, including molds and yeasts.

A "potentiator system" in the present technology refers to a system comprising at least one potentiator that in combination with at least one biocidal agent increases the efficacy of the biocidal agent(s). The potentiator system can also comprise a suitable carrier used as a solvent for the at least one potentiator.

The EPA-approved and industrial standard for a claimed microbial contact kill time efficacy for a bucket dilutable composition for major biocidal targets, e.g. *Staphylococcus aureus, Salmonella enterica, Pseudomonas aeruginosa,* etc., is 10 minutes. In actual use in industrial and hospital settings, there is a need for shorter contact times to approximate use in the real world settings where the practicality of a disinfectant contacting a work surface for 10 minutes or more is only under ideal circumstances and any reduction in the contact time would allow for approximating working conditions. Surprisingly, in light of such shortcomings, a new methodology has been surprisingly discovered for determining biocidal compositions with increased efficacy, e.g., 5 minute or less microbial contact kill time. Such methodology is described herein. This methodology demonstrates that more addition of a particular potentiator into a biocidal composition, e.g., the quat or surfactant, does not result in an increase in the biocidal efficacy for that composition. As described in more detail below and not wanting to be bound by any particular theory, it is believed that the particular ranges of each of the particular components (e.g., quat and/or potentiators) that work together (e.g., synergistically) to provide the increased biocidal efficacy are able to be determined using the new methodologies described below. Further, these biocidal compositions provide stable compositions that are able to withstand storage over long periods of time, a necessary property for making a biocidal composition feasible for commercial applications. The present technology also involves making biocidal formulations using a rapid screening assay to determine stable biocidal compositions with enhanced biocidal efficacy, including a reduction of the microbial contact time to about 5 minutes or less for at least one biocidal target. These biocidal compositions include at least one biocidal agent and at least one potentiator system.

Unexpectedly, the ability of the potentiator system to increase the efficacy of a biocidal agent is not additive, e.g. adding more of the potentiator system or biocidal agent to the composition does not necessarily correlate with increased biocidal effectiveness of the composition. Rather, it is believed that a combination of the concentrations of the potentiator system and biocidal agent below the maximum concentration located in the "hot spot" or local concentration ranges results in biocidal compositions providing an unexpected synergistic biocidal efficacy, e.g., a shorter microbial contact time of about 5 minutes or less for at least one biocidal target.

In the present technology, a quantitative rapid screening assay (RSA) and/or statistical analysis is used to assay the ability of a biocidal composition of the present technology to kill a biocidal target within a specified time. The assay of the present technology also allows for one to predict the ability of the biocidal composition to pass the EPA efficacy claim UDT test to become an EPA registered disinfectant against at least one biocidal target for that specified contact time. Further, in at least one embodiment of the present technology, there is provided a rapid screening of potentiator systems that provide an increased biocidal efficacy as well as identification of other potentiator systems able to be used with a particular biocidal agent. This method can be used to enhance the biocidal efficacy of the potentiator system at sub-maximal concentrations resulting in both an increased efficacy, cost savings and reduced footprint of chemicals released into the environment. Such outcomes were previously believed to be unforeseen before the development of the present technology.

The RSA method allows for the simultaneous evaluation of multiple formulations on a single experimental run and provides results in about one hour. The RSA data derived can be used to compare either different formulations of biocidal compositions or different ranges of the potentiators of the potentiator system within the formulation by statistically based experimental design for concurrent multivariable manipulation to identify "hot spots", as shown in the examples below for a 5 minute kill time. These hot spots are not able to be identified using traditional one variable at a time formulaic processing. The "hot spots" are not found by routine steps, but by using the combination of the rapid screening assay and/or statistical analysis of the results, which has not been previously appreciated by those in the art.

In another embodiment of the present technology, there is provided a quantitative method of determining the percent kill of a biocidal composition for at least one biocidal target at a specific contact time. The method includes, for example, the steps of adding at least one biocidal composition, adding at least one microbial agent and incubating the mixture for a sufficient contact time. A sufficient contact time includes, for example, less than about 10 minutes, more preferably about 5 minutes or less, for example, about 9 minutes or less, about 8 minutes or less, about 7 minutes or less, about 6 minutes or less, about 5 minutes or less, about 4 minutes or less, about 3 minutes or less, about 2 minutes or less, about 1 minute or less, about 30 seconds or less. In some embodiments, the contact time for a bacterial biocidal target is suitable at about 5 minutes or less.

In other embodiments, the contact time for a virocidal composition is suitably 5 minutes or less. In some embodiments, the biocidal composition is a dilutable biocidal composition and is tested by diluting the biocidal composition at the proper diluent ratio under hard water conditions and with an organic soil load. "Hard water conditions" include water with high mineral content, e.g., at least about 200 ppm, more preferably about 400 ppm calcium. Under testing conditions, synthetic hard water can be provided by adding CaCO₃ in the mixture. An organic soil load is provided to mimic dirt associated with a dirty surface to be cleaned, and in testing conditions well known in the art, for example, can be bovine serum albumin (BSA), horse serum, etc. Suitable organic loads for testing are about 5% of the biocidal target solution. The method further include the steps of adding a sufficient amount of at least one viability agent to the mixture to quantitatively measure the viable biocidal target in the mixture and comparing the quantitative amount of the viable biocidal target in the test solution with an untreated control to determine the percent kill of the biocidal target by the biocidal composition. Viability agents, for use in practicing the present technology, include any agent known in the art that is able to distinguish between live and dead biocidal target organisms. Suitable viable agents can be, for example, a bioluminescence, fluorescence, or dyes which quantitatively distinguish between live or dead cells of a biocidal target organism. A suitable bioluminescence reaction includes, but is not limited to, cell viability kits that comprise a substrate/enzyme reaction used to determine the intracellular ATP content of eukaryotic cells. ATP from the prepared sample reacts with the firefly enzyme, luciferase, to oxidize the provided substrate luciferin, which generates light. The light output of the reaction is measured in a luminometer. ATP is a useful biochemical indicator because it is a unit of energy exchanged within living cells and strictly regulated in its concentration within live cells. One such suitable bioluminescence kit is a luciferase/luciferin enzyme substrate kit, BacTiter-Glo™ Microbial Cell Viability Assay, commercially available from Promega Corporation, Madison, WI.

Another suitable viability agent includes the colorimetric or fluorescent measurement of lactate dehydrogenase (LDH) (stable enzyme released from cells upon cellular damage), trypan blue exclusion, and fluorescent based flow cytometry. Many methods and kits to test for cell viability of bacteria, yeast, virus, and fungi are well known to one skilled in the art, and it is envisioned that any of these methods or kits can be used in the practice of the present technology.

The RSA of the present technology can use a known amount of at least one biocidal target and thus can provide a quantitative readout (percent kill) and reproducible results. Furthermore, the RSA allows for comparison of passing or failing formulations that may be used to troubleshoot and design further biocidal formulations capable of passing the efficacy claims for EPA registration.

The RSA can further be used in conjunction with a Design on Experiment ("DoE") statistical analysis method or program to compare data and provide predicted ranges of the potentiator system that are able to pass the EPA efficacy claim testing for registration. DoE is a structured, organized method known in the art that can be used to determine the relationship between the different factors (potentiator system components) affecting a product (biocidal composition) and an output of that product (efficacious disinfectant with a decreased kill time). Any suitable statistical analysis program to analyze multivariable models known in the art can be used. For example, a suitable statistical program includes, but is not limited to, Design-Expert®, version 7 (DX7) software commercially available from Stat-Ease, Inc., Minneapolis, MN. Using DX7 software for the analysis of formulations of the present technology, we are able to find hot spots or local maximal concentration combinations which provide a percent kill predictive of the ability to pass the EPA efficacy claim test, for example, registration as a hospital disinfectant. As demonstrated in the Examples below, data entered into the DX7 software of the test samples with different potentiator concentrations used and resultant percent kill can be fitted to a quadratic model and graphed to determine the "hot spots" of the formulations of the present technology exhibiting increased efficacy, e.g. a 5 minute kill time.

As described in the examples below, the RSA and statistical analysis of the resultant data via DX7 software allows for the determination of ranges of concentrations or "hot spots" at which the biocidal efficacy of the biocidal agent is improved, e.g. approximately 5 minute or less microbial contact kill time. As described in more detail below, the RSA and DX7 program can be used to identify biocidal compositions having, for example, a 5 minute microbial contact kill time for use as a hospital disinfectant.

Further embodiments of the present technology are directed toward biocidal compositions developed using the method described above including at least one biocidal agent and at least one potentiator system having an increased biocidal efficacy as seen by a reduced microbial contact kill time of less than about 10 minutes, more preferably about 5 minutes or less. The biocidal compositions of the present technology have been assayed using the methods described above to test for both stability of the compositions and for efficacy, e.g., a 5 minute or less microbial contact kill time. The biocidal compositions derived from the quantitative rapid screening assay and/or statistical analysis described herein is not mere random formulation development, but analysis and modeling of quantitative data derived from the RSA assay and correlating the concentrations of components of the biocidal compositions with the percent kill of specified biological targets to predict and develop specific formulations with enhanced biocidal efficacies (e.g., potency, microbial contact kill time, and/or spectrum of activity).

Stability of biocidal compositions is important for commercial use of such products to ensure that biocidal efficacy does not diminish over time. Not to be bound by any particular theory, the biocidal compositions of the present invention are believed to be stable, both thermally and over time. Stability is desired for the biocidal composition to retain its useful properties on the timescale of its expected usefulness. The compositions of the present technology can be stable at temperatures of from about 4°C to about 50°C, alternatively about 25°C to about 40°C. In some embodiments, the compositions are stable at about 25°C for at least about 2 weeks, alternatively at least about 4 weeks, alternatively at least about 6 weeks. The compositions can have a shelf life and can be stable at about 25°C for at least about 1 day, at least about 3 days, at least about 1 week, at least about 2 weeks, at least about 3 weeks, at least about 4 weeks, at least about 5 weeks, at least about 6 weeks, at least about 7 weeks, at least about 8 weeks, at least about 10 weeks, at least about 12 weeks, at least about 15 weeks, at least about 18 weeks, at least about 20 weeks, at least about 24 weeks, at least about 26 weeks, at least about 28 weeks, at least about 30 weeks, at least about 32 weeks, at least about 34 weeks, at least about 36 weeks, at least about 38 weeks, or at least about 40 weeks. In some embodiments, the biocidal compositions can be tested and analyzed by using the RSA and statistical analysis to identify additional stable biocidal compositions.

In one embodiment, the present technology provides a biocidal composition comprising at least one biocidal agent and at least one potentiator system having an increased biocidal efficacy as determined by the methods described above. The biocidal efficacy can be measured by any suitable means known in the art, including, for example increased percentage kill of at least one biocidal target for a specified contact time, reduced minimum inhibitory concentration, reduced kill time determined by UDT, RSA, etc., examples of which are provided in more detail below. The method and/or required contact times used to measure biocidal efficacy are known in the art and will depend on the type of composition, e.g. ready-to-use, dilutable concentrate, wipe; the type of surface on which the biocidal agent is used, e.g., food or non-food contacted surfaces, porous or non-porous surfaces, stone, steel, plastic, etc.; and/or the biocidal target. For example, the biocidal efficacy can be measured as a decrease in the microbial contact kill time of less than about 10 minutes, more preferably about 5 minutes or less for at least one biocidal target. Thus, the biocidal compositions of the present technology can have a microbial contact kill time of less than about 10 minutes, alternatively about 9 minutes or less, alternatively about 8 minutes or less, alternatively about 7 minutes or less, alternatively about 6 minutes or less, alternatively about 5 minutes or less, alternatively about 4 minutes or less, alternatively about 3 minutes or less, alternatively about 2 minutes or less, alternatively about 1 minute or less, or alternatively about 30 seconds or less for at least one biocidal target. For some particular embodiments with bactericidal properties, the microbial contact time for at least one bacteria is suitably about 5 minutes or less, for example, about 5 minutes, about 4 minutes, about 3 minutes, about 2 minutes, about 1 minute, or about 30 seconds. For other embodiments of biocidal compositions with virocidal properties, the microbial contact time for at least one virus is suitably about 5 minutes or less, for example, about 5 minutes, about 4 minutes about 3 minutes, about 2 minutes, about 1 minute, or about 30 seconds.

As noted above, the biocidal compositions of the present technology are not derived from mere optimization of known formulations. The concentrations of the potentiators comprising the one or more potentiator systems and the one or more biocidal agents are derived from the methods described above using a rapid screening assay and statistical analysis to identify "hot spot" regions of the concentrations of the potentiators and/or biocidal agent able to provide about 5 minute or less microbial contact kill time. Again, without being bound by any particular theory, it is believed that it is the particular potentiators selected and the particular ranges of the concentrations of those potentiators that work in synergy to provide the increased biocidal efficacy, as demonstrated, for example, by a decrease in the microbial contact kill time for at least one biocidal agent. In some embodiments, the biocidal compositions of the present technology have a wider range of biocidal efficacy, as seen by the ability to kill additional biocidal targets within the microbial contact kill time.

The biocidal compositions of the present technology are capable of inhibiting, reducing or eliminating growth of a wide range of biocidal targets. The biocidal targets can include, but are not limited to: green algae such as *Chlorella vulgaris, Scenedesmus obliquus, Ulothrix lactuca,* blue-green algae such as *Oscillatoria lutea, Phormidium inundatum, Anabaena verrucosa,* gram negative bacteria such as *Campylobacter jejuni, Pseudomonas aeruginosa, Salmonella enterica,* gram positive bacteria such as *Mycobacterium tuberculosis, Staphylococcus aureus, Streptococcus pyogenes, Clostridium difficile,* enveloped viruses such as *Avian Influenza Virus, Hepatitis B Virus, West Nile Virus, Human Immunodeficiency Virus* (HIV), non-enveloped viruses such as *Adenovirus, Feline calicivirus, Hepatitis A Virus, Polio Virus,* molds such as *Penicillium marneffei, Aspergillus niger, Trichophyton mentographytes,* and yeasts such as *Candida albicans, Saccharomyces cerevisiae, Cryptococcus albidus.* Although this listing of biocidal targets is not intended to be exhaustive, it will be appreciated by those skilled in the art that the biocidal compositions of the present technology exhibit an enhanced efficacy. Use of the biocidal compositions and methods of the present technology to inhibit, reduce or eliminate the growth of microbiological spores and vegetative cells is also contemplated. Biocidal compositions and methods of the present technology can also be used to inhibit, reduce, or eliminate growth of protozoa, dust mites, parasites, biofilms, worms and helminthic organisms.

The biocidal compositions of the present technology can expand the spectrum of the biocidal agent used in the composition to include a wider range of biocidal targets. The compositions of the present technology are believed to improve the rates of kill of the biocidal agent, thus reducing the contact time required to produce a biocidal effect. Suitable biocidal agents include, but are not limited to, quaternary ammonium compounds, or "quats." Any quat can be used in the presently described technology. Examples of quats include, for example, alkyl ammonium halides such as cetyl trimethyl ammonium bromide, alkyl aryl ammonium halides, N-alkyl pyridinium halides such as N-cetyl pyridinium bromide, among others. One suitable type of quat includes, for example, those in which the molecules contain amine, ether or ester linkages such as octyl phenoxy ethoxy ethyl dimethyl benzyl ammonium chloride, N-(laurylcocoaminoformylmethyl)-pyridinium chloride, among others.

Another type of quat for practice of the present technology includes, for example, those in which the hydrophobic radical is characterized by a substituted aromatic nucleus, as in the case of lauryloxyphenyltrimethyl ammonium chloride, cetylaminophenyltrimethyl ammonium methosulfate, dodecylphenyltrimethyl ammonium methosulfate, dodecylbenzyltrimethylammonium chloride, chlorinated dodecylbenzyltrimethyl ammonium chloride, and the like. Preferably, the quats utilized in the practice of the present technology exhibit biocidal activity or are biocidal in nature. Further examples of quats include, but are not limited to, didecyl dimethyl ammononium chloride, such as BTC®1010, BTC®818 available from Stepan Company, Northfield, IL; alkyl dimethyl benzyl ammonium chloride (ABDAC); dialkyldimethyl ammonium chloride (DDAC); n-alkyl dimethyl benzyl ammonium chloride; alkyl dimethyl benzyl ammonium saccharinate; and combinations thereof. For example, ABDAC and DDAC can be combined in any suitable ratio to comprise the quat, for example, about 60%/40% DDAC /ADBAC, alternatively about 50%/50%, about 55%/45%, about 45%/55%, about 40%/60%, about 65%/35%, about 35%/65%, about 30%/70%, about 70%/30%, about 25%/75%, about 75%/25%, about 80%/20%, about 20%/80% DDAC/ADBAC or any combination there between. Additional suitable quats can be obtained from Stepan Company, Northfield IL, e.g., BTC®835, BTC®824, BTC®1010, BTC®1210, BTC®885, BTC®1210-80%, BTC®2125M, BTC®471M, and any combination thereof.

In some embodiments, the biocidal composition of the present technology can expand the spectrum of the biocidal agent used in the composition, for example, from a bactericidal composition to a bactericidal and virocidal composition. Further, the biocidal composition can expand the spectrum of the biocidal agent within its original biocidal target, for example, but not limited to, having an efficacy against gram negative bacteria to having an efficacy against gram negative and gram positive bacteria or vice versa, or toward specific bacteria within the family of gram negative bacteria, e.g., having an efficacy against *S. enterica* to efficacy against *S. enterica* and *P. aeruginosa.*

The concentration of the at least one biocidal agent or a combination of biocidal agents in the end use concentration of the biocidal compositions of the present technology can be, for example, from about 500 ppm to about 3000 ppm, alternatively about 600 ppm to about 2000 ppm, alternatively about 800 ppm to about 1200 ppm. In some embodiments, the concentration of the biocidal agent in the end use concentration of the biocidal composition can be about 500 ppm to about 3000 ppm, alternatively about 500 ppm to about 2000 ppm, from about 500 ppm to about 1500 ppm, from about 500 ppm to about 1000 ppm, from about 500 ppm to about 850 ppm, alternatively from about 600 ppm to about 2000 ppm, from about 600 ppm to about 1700 ppm, from about 600 ppm to about 1500 ppm, from about 600 ppm to about 1000 ppm, from about 600 ppm to about 850 ppm, from about 600 ppm to about 700 ppm, alternatively from about 700 ppm to about 2000 ppm, from about 700 ppm to about 1700 ppm, from about 700 ppm to about 1500 ppm, from about 700 ppm to about 1200 ppm, from about 700 ppm to about 1000 ppm, from about 700 ppm to about 850 ppm, alternatively about 800 ppm to about 2000 ppm, about 800 ppm to about 1700 ppm, about 800 ppm to about 1500 ppm, from about 800 ppm to about 1200 ppm, from about 800 ppm to about 1000 ppm, from about 800 ppm to about 900 ppm. For example, the concentration of the biocidal agent can be about 700 ppm, about 750 ppm, about 775 ppm, about 800 ppm, about 825 ppm, about 850 ppm, about 875 ppm, about 900 ppm, about 925 ppm, about 950 ppm, about 975 ppm, about 1000 ppm, about 1025 ppm, about 1050 ppm, about 1075 ppm, about 1100 ppm, about 1125 ppm, about 1150 ppm, about 1200 ppm, about 1250 ppm, about 1300 ppm, about 1350 ppm, about 1400 ppm, about 1450 ppm, about 1500 ppm, about 1550 ppm, about 1600 ppm, about 1650 ppm, about 1700 ppm, about 1750 ppm, or about 1800 ppm. It is contemplated in the present technology that the amounts of the biocidal compositions can be any range of end use concentrations in between these values as determined by the RSA and statistical methods described above, and can be, for example, in additional increments of, for example, 0.1, 0.2, 0.3, 0.4, 0.5, 0.6, 0.7, 0.8, 0.9 or 1.0 ppm and multiplied factors thereof.

Alternatively, it is also contemplated that the quats of the present technology can be replaced by or used in combination with other biocidal agents such as aldehydes, phenolics, isothiazolines, alcohols, carbamates, halide compounds, peroxides, parabens, iodine, metals, peracids, carbonates, derivatives thereof, alternatives thereof, equivalents thereof or combinations thereof to produce further biocidal compositions of the presently described technology.

Again, not to be bound by any particular theory, it is believed that the potentiator system acts as a synergistic potentiator for the biocidal agent in a biocidal composition to increase the biocidal agent's biocidal efficacy. The biocidal agent and the potentiator system can be combined in a synergistically effective amount. A "synergistically effective amount" is an amount of each of the components in a composition that, acting together, creates an effect greater than that predicted by knowing only the separate effects of the individual components alone. The biocidal compositions comprising at least one biocidal agent and at least one potentiator system can be a synergistic combination having a synergy index of less than 1.0, alternatively not greater than about 0.6, alternatively not greater than about 0.51, as calculated by the industry accepted method described by S.C. Kull et al. in Mixtures of Quaternary Ammonium Compounds and Long-Chain Fatty Acids as Antifungal Agents, Applied and Environmental Microbiology, Vol. 9, pages 538-541 (1961). The Kull reference is incorporated herein by reference in its entirety. The synergistic activities of the components/compositions of the present technology illustrate the cooperative action of combining quats and the potentiator system of the present technology to yield a total biocidal effect which is greater than the sum of the biocidal effects of the quats and the potentiator system when they are separately used.

The potentiator system of the present technology includes at least one potentiator. The at least one potentiator can include, but is not limited to, at least one surfactant, at least one solvent, at least one chelating agent, at least one chemical stabilizer, at least one pH buffering agent, or combinations thereof. The potentiator system can further include a suitable carrier/diluent. A "suitable carrier" can comprise any solvent able to dissolve the at least one potentiator, including, but not limited to, e.g., water, glycols (preferably propylene glycol), or alcohols (e.g., isopropanol, ethanol, methanol).

In some embodiments, the potentiator of the presently described invention can include one or more surfactants. Suitable surfactants can be non-ionic, zwitterionic, amphoteric, anionic, or cationic surfactants. The surfactant can also be a combination of two or more surfactants. Particularly suitable non-ionic surfactants can include alcohol ethoxylates, e.g., Surfonic L12-6 (from Huntsman, Woodland, TX), Stepan's Bio-soft® ET-650 (Ethoxylated C10-14 Alcohols), or Stepan's Bio-soft® N1-9 available from Stepan Company, Northfield, IL.

Suitable zwitterionic or amphoteric surfactants include, but are not limited to, Cocamidopropyl Hydroxysultaine, such as Stepan's Amphosol CS-50, available from Stepan Company, Northfield IL.

Suitable cationic surfactants include, but are not limited to Amine Oxide, such as AMMONYX^{®} LMDO available from Stepan Company, Northfield IL.

In some examples of such embodiments, the concentration of the surfactant or combination of surfactants included in the end use composition comprises about 50 ppm to about 1500 ppm, alternatively about 100 ppm to about 1000 ppm, alternatively about 200 to about 800 ppm, alternatively about 300 ppm to about 500 ppm, about 70 ppm to about 90 ppm, alternatively about 80 ppm. The concentration of the surfactant in the end use concentration can be, for example, about 50 ppm, about 60 ppm, about 70 ppm, about 80 ppm, about 90 ppm, about 100 ppm, about 110 ppm, about 120 ppm, about 130 ppm, about 140 ppm, about 150 ppm, about 160 ppm, about 170 ppm, about 180 ppm, about 190 ppm, about 200 ppm, about 300 ppm, about 400 ppm, about 500 ppm, about 600 ppm, about 700 ppm, about 750 ppm, about 800 ppm, about 850 ppm, about 900 ppm, about 950 ppm, about 1000 ppm, about 1050 ppm, about 1100 ppm, about 1150 ppm, about 1200 ppm, about 1250 ppm, about 1300 ppm, about 1350 ppm, about 1400 ppm, about 1450 ppm, about 1500 ppm, or about 1550 ppm. It is contemplated in the present technology that the amounts of the end use concentrations of the surfactant can be any numerical value in between these values as determined by the RSA and statistical methods described above, and can be, for example, in additional increments of, for example, 0.1, 0.2, 0.3, 0.4, 0.5, 0.6, 0.7, 0.8, 0.9 or 1.0 ppm and multiplied factors thereof, (e.g. x1, x2, x10, x100, etc). In one suitable embodiment, the composition comprises a biocidal agent and a potentiator system comprising a surfactant.

The at least one potentiator of the present technology can optionally include one or more solvents, more suitably low volatile organic compounds (VOCs), including, but not limited to, propylene glycol n-propyl ether, e.g. Dowanol® PnP (from Dow Chemical Company), propylene glycol monomethyl ether (PGME), butyl carbitol, Steposol® DG solvent (available from Stepan Company, Northfield IL), ethoxlated geraniol, and geraniol. The at least one solvent in the end use concentration of the biocidal compositions can be present in an amount from about 0 ppm to about 2000 ppm, alternatively about 50ppm to about 1500 ppm, alternatively about 100 ppm to about 1000 ppm. The concentration of the solvent can be, for example, about 10 ppm to about 2000 ppm, about 10 ppm to about 1500 ppm, about 10 ppm to about 1000 ppm, from about 10 ppm to about 700 ppm, from about 100 ppm to about 2000 ppm, from about 100 ppm to about 1500 ppm, from about 100 ppm to about 1320 ppm, from about 100 ppm to about 1000 ppm, from about 100 ppm to about 700 ppm, from about 500 ppm to about 2000 ppm, from about 500 ppm to about 1500 ppm, from about 500 ppm to about 1200 ppm, from about 500 ppm to about 1000 ppm, from about 500 ppm to about 700 ppm.

Suitable embodiments include at least one solvent as a component of the potentiator system in amounts in the end use concentration that can be about, for example about 10 ppm about 20 ppm, about 40 ppm, about 60 ppm, about 80 ppm, about 100 ppm, about 120 ppm, about 140 ppm, about 160 ppm, about 180 ppm, about 200 ppm, about 220 ppm, about 240 ppm, about 260 ppm, about 280 ppm, about 300 ppm, about 320 ppm, about 340 ppm, about 360 ppm, about 380 ppm, about 400 ppm, about 420 ppm, about 440 ppm, about 460 ppm, about 480 ppm, about 500 ppm, about 520 ppm, about 540 ppm, about 560 ppm, about 580 ppm, about 600 ppm, about 620 ppm, about 640 ppm, about 660 ppm, about 680 ppm, about 700 ppm, about 720 ppm, about 740 ppm, about 760 ppm, about 780 ppm, about 800 ppm, about 820 ppm, about 840 ppm, about 860 ppm, about 880 ppm, about 900 ppm, about 920 ppm, about 940 ppm, about 960 ppm, about 980 ppm, about 1000 ppm, about 1025 ppm, about 1050 ppm, about 1075 ppm, about 1100 ppm, about 1125 ppm, about 1150 ppm, about 1175 ppm, about 1200 ppm, about 1225 ppm, about 1250 ppm, about 1275 ppm, about 1300 ppm, about 1325 ppm, about 1350 ppm, about 1375 ppm, about 1400 ppm, about 1450 ppm, or about 1500 ppm. It is contemplated in the present technology that the amounts of the end use concentrations of the solvent can be any numerical value in between these values as determined by the RSA and statistical methods described above, and can be, for example, in additional increments of, for example, 0.1, 0.2, 0.3, 0.4, 0.5, 0.6, 0.7, 0.8, 0.9 or 1.0 ppm and multiplied factors thereof.

In some embodiments of the present technology, the potentiator system further includes at least one chelating agent as an optional component. Chelating agents are particularly suitable for a potentiator system used in a dilutable biocidal composition where the diluent can have a high mineral content (e.g., hard water). Suitable chelating agents include, but are not limited to, ethylenediaminetetraacetic acid (EDTA) such as verseen, ethylene glycol tetraacetic acid (EGTA), or nitrolotriacetic acid (NTA). The chelating agent or combination of chelating agents can be provided in the end use concentration as a component of the potentiator system in amounts of from about 0 ppm to about 1000 ppm, alternatively about 10 ppm to about 500 ppm, alternatively about 50 ppm to about 200 ppm, alternatively about 100 ppm to about 150 ppm, for example, about 10 ppm, about 20 ppm, about 30 ppm, about 40 ppm, about 50 ppm, about 60 ppm, about 70 ppm, about 80 ppm, about 90 ppm, about 100 ppm, about 110 ppm, about 120 ppm, about 130 ppm, about 140 ppm, about 150 ppm, about 160 ppm, about 170 ppm, about 180 ppm, about 190 ppm, about 200 ppm, about 210 ppm, about 220 ppm, about 230 ppm, about 240 ppm, about 250 ppm, about 260 ppm, about 270 ppm, about 280 ppm, about 290 ppm, about 300 ppm, about 320 ppm, about 330 ppm, about 340 ppm, about 360 ppm, about 380 ppm, about 400 ppm, about 410 ppm, about 420 ppm, about 440 ppm, about 460 ppm, about 480 ppm, about 500 ppm, about 520 ppm, about 540 ppm, about 560 ppm, about 580 ppm, about 600 ppm, about 620 ppm, about 640 ppm, about 660 ppm, about 680 ppm, about 700 ppm, about 720 ppm, about 760 ppm, about 780 ppm, or about 800 ppm. It is contemplated in the present technology that the amounts of the end use concentrations of the chelating agent can be any numerical value in between these values as determined by the RSA and statistical methods described above, and can be, for example, in additional increments of, for example, 0.1, 0.2, 0.3, 0.4, 0.5, 0.6, 0.7, 0.8, 0.9 or 1.0 ppm and multiplied factors thereof.

The biocidal compositions of the present technology can have a specific pH range for optimal use, depending on the particular end use and type of surface treated. The biocidal composition described herein can have a pH between about 7 and about 13. One suitable composition has a pH between about 7 and about 9, more suitably about 8 and about 9, more suitably between about 8.2 and about 8.8, more suitably a pH between about 8.4 and about 8.6. In one particular embodiment, the composition has a pH of about 8.55. Another suitable composition has a pH between about 9 and about 13, alternatively between about 10 and about 12.5, alternatively between about 11 and about 12, alternatively between about 11.5 and 11.9. In one particular embodiment, the biocidal composition has a pH of about 11.8. For example, the pH of the biocidal composition can be about 7.0, about 7.2, about 7.3, about 7.4, about 7.5, about 7.6, about 7.7, about 7.8, a about 7.9, about 8.0, about 8.1, about 8.2, about 8.3, about 8.4, about 8.5, about 8.6, about 8.7, about 8.8, about 8.9, about 9.0, about 9.2, about 9.4, about 9.6, about 9.8, about 10.0, about 10.2, about 10.4, about 10.6, about 10.8, about 11.0, about 11.2, about 11.4, about 11.6, about 11.8, about 11.9, about 12.0, about 12.2, about 12.4, about 12.6, or about 12.8. It has been discovered that an acidic RTU product can be ineffective against some biocidal targets such as gram-positive bacteria (e.g., *Staphylococcus aureus).* This problem can be reduced or eliminated by adjusting the pH of the biocidal composition of the present technology to the ranges as described above.

In some embodiments, to obtain the desired pH of the compositions described above, the potentiator system can further comprise a pH buffering agent. Suitable pH buffering agents are used to increase or decrease the pH to the suitable range and include, for example, inorganic acids or bases. Suitable organic acids include, but are not limited to, carboxylic acids, including citric acid, lactic acid, or acetic acid. In some embodiments, at least one base is used to alter the pH of the biocidal composition to the desired pH. Suitable bases are known in the art, and include, but are not limited to, sodium hydroxide, sodium carbonate, sodium bicarbonate, EDTA, derivatives thereof and combinations thereof.

The biocidal compositions of the present technology can include optional ingredients as known in the art. Such optional ingredients include dyes, fragrances, preservatives, dispersion agents, etc.

The biocidal compositions of the present technology can be prepared, for example, in a solid, gel, suspension, slurry, liquid or powdered form, or any other suitable form using different delivery vehicles, and can be prepared, for example as a ready-to-use or dilutable concentrate product. Whether in a ready-to-use form or a dilutable concentrate, the end use concentration of the components are equivalent. A dilutable concentrate must first be diluted in a suitable diluent to obtain the end use concentration. The delivery vehicles for a liquid form composition can be any diluent system known in the art. Examples of suitable diluents include, but are not limited to, water, glycols (preferably propylene glycol), alcohols (e.g., isopropanol, ethanol, methanol), other polar solvents known in the art, and mixtures thereof. Water is a preferred diluent of the presently described technology, and either de-ionized or regular tap water can be used. When glycols such as ethylene glycol are used, the diluent is preferably heated, for example, to from about 75°C to about 150°C, when the biocidal actives are added to the diluent, to improve solubility of the active material.

The delivery vehicles or carriers for powdered form compositions of the present technology can also be called fillers. Any substance that is inert, dry, relatively low toxicity and cost effective can be used as the filler. Examples of suitable fillers include, but are not limited to, urea, dibasic calcium phosphate dehydrate, sodium sulfate, barium sulfate, calcite, calcium carbonate, wollastonite, calcium metasilicate, clay, aluminum silicate, magnesium aluminum silicate, hydrated alumina, silica, silicon dioxide, titanium dioxide, derivatives thereof, and mixtures thereof. The solid or gel form can be prepared using suitable delivery vehicles known in the art as well.

Standard blending equipment is acceptable for preparing the biocidal compositions of the present technology. Preparation, handling, and packaging precautions employed can be consistent with those established for quat-based formulations known in the art.

When making a liquid form biocidal composition of the present technology, preferably, the diluent or carrier (e.g., water or glycol) can be added into a blender or container followed by the addition of the biocidal agent and the potentiator system. The potentiator system can be added as a premixed composition or the components of the potentiator system can be added to the biocidal composition one at a time. Thorough mixing with minimal agitation is preferred between ingredient addition steps. If a glycol is used in the diluent, the diluent is preferably heated to from about 75° C to about 150° C, alternatively from about 75° C to about 100° C before the potentiator system and/or biocidal agent is added. All components are preferably mixed until they are dissolved.

In accordance with at least one embodiment of the present technology, the biocidal composition can be a ready-to-use product or a dilutable composition.

In accordance with another embodiment of the present technology, the biocidal composition can be a dilutable concentrate product. As defined above, a dilutable concentrate product is a product that requires dilution with a diluent (e.g., water) in a ratio of about, for example, 1:256, 1:128, 1:100, 1:64, 1:32, 1:16 or 1:10 among others, before it can be applied to articles or surfaces to be biocidally treated or disinfected. Depending on the intended dilution ratio, the concentration of actives in the dilutable concentrate product can vary.

For a 1:128 dilutable concentrate biocidal composition, for example, the dilutable concentrate biocidal composition can contain from about 6.0% to about 25.0%, alternatively from about 8.0% to about 13%, alternatively from about 10.0% to about 12.0%, of at least one quat or blend of quats, corresponding to a use concentration of quat or blend of quat of from about 500 ppm to about 2000 ppm, alternatively from about 625 ppm to about 1000 ppm, alternatively from about 780 ppm to about 940 ppm. The 1:128 dilutable concentrate biocidal composition further comprises a potentiator system including at least one surfactant, at least one solvent, at least one chelating agent and/or at least one pH buffering agent. In one suitable embodiment, the dilutable concentrate includes from about 0.5% to about 10%, alternatively about 1% to about 8%, alternatively from about 2% to about 6%, alternatively from about 0.5% to about 2.0% of at least one surfactant, based on the total weight of the dilutable concentrate biocidal composition. Further, the suitable 1:128 dilutable concentrate biocidal composition contains from about 0% to about 15%, alternatively from about 1% to about 12%, alternatively from about 3% to about 10%, alternatively from about 5% to about 9%, alternatively from about 6% to about 9% of at least one solvent based on the total weight of the biocidal composition. Further, the suitable 1:128 dilutable concentrate biocidal compositions contains at least one chelating agent at from about 0% to about 10.0%, alternatively from about 0.01% to about 5.0%, alternatively from about 0.1% to about 3.0%, alternatively from about 1.4% to about 2.0%, based on total weight of the dilutable concentrate biocidal composition, wherein the chelating agent is for example, EDTA (ethylenediaminetetraacetic acid), Versene™ 100 (Tetrasodium ethylenediaminetetraacetate, available from Dow, Midland, MI), EGTA (ethylene glycol tetraacetic acid), or combinations thereof. Suitably, Versene can be used as an 80% solution at about 2% to about 6%, more suitably from about 3% to about 5%, more suitably about 4% based on the total weight of the dilutable concentrate biocidal composition.

In some particular embodiments, at least one optional pH buffering agent can be added to the dilutable concentrate biocidal composition to alter the composition to a desired pH. Suitably, the pH buffering agent comprises about 0% to about 6%, alternatively about 0.01% to about 5%, alternatively about 0.05% to about 2%, alternatively about 0.1 % to about 1%, alternatively about 0.3% to about 0.5% of the total weight of the dilutable concentrate biocidal composition.

It is contemplated in the present technology that the percentages of the components as described above can be any numerical percentage value as determined by the RSA and statistical methods described above, and can be, for example, in additional increments of, for example, 0.1, 0.2, 0.3, 0.4, 0.5, 0.6, 0.7, 0.8, 0.9 or 1.0 %, or multiplied factors thereof (e.g., x2 x3, x10, x50, x100, etc.).

Other optional ingredients as known in the art, including dyes, fragrances, etc., can also be formulated into the dilutable concentrate products of the present technology. For example, the 1:128 dilutable concentrate can contain from about 0.001 % to about 0.1 % of a dye and from about 0.01 % to about 0.5% of a fragrance.

If a dilutable product with 1:256, 1:100, 1:64, 1:32, 1:16, 1:10, or other dilution ratio is intended, a person of ordinary skill in the art will be able to calculate such compositions of the present technology based on the above example of the proper ranges of the different components in a dilutable concentrate product for that particular embodiment.

Any of the embodiments of biocidal compositions described herein can be used as a hospital disinfectant. In suitable embodiments, the hospital disinfectant has a microbial contact kill time for *Staphylococcus aureus* of approximately 5 minutes or less. In other suitable embodiments, the hospital disinfectant has a microbial contact kill time for *Salmonella enterica* of approximately 5 minutes or less. In still other embodiments, the biocidal composition has a microbial contact kill time for *Pseudomonas aeruginosa* of approximately 5 minutes or less. In a particularly suitable embodiment, the biocidal compositions have an approximately 5 minute or less microbial contact kill time for *Staphylococcus aureus, Salmonella enterica,* and *Pseudomonas aeruginosa.*

Suitable methods of determining an increase in biocidal efficacy are known in the art. Biocidal efficacy can be measured as an increase in percentage kill for a biocidal target after a specified time in contact with the composition (e.g. efficacy percentage). The EPA has regulations regarding required contact times for different surfaces and also accepted regulatory protocols for testing, which are known to one skilled in the art. In another embodiment, the increased biocidal efficacy can be measured as a decrease in the kill time of a composition, e.g. the amount of time necessary to kill at least 99.98% of the biocidal target on a surface after a specified contact time. The EPA-approved and industrial standard contact time for a bucket dilutable composition for major biocidal targets, e.g. *Staphylococcus aureus, Salmonella enterica,* and *Pseudomonas aeruginosa,* etc., is 10 minutes. Dilutable biocidal compositions of the present technology can have a kill time of at least about 7 minutes or less, alternatively at least about 5 minutes or less, alternatively at least about 4 minutes or less, alternatively at least about 3 minutes or less, alternatively at least about 2 minutes or less.

As described in the examples below, the RSA is an accurate predictor of test formulations of biocidal compositions which have a reduced kill time as determined by the AOAC EPA required UDT.

### Examples

### Example 1: Use-Dilution Method for Determining Antimicrobial Efficacy

Biocidal efficacy of exemplary dilutable concentrate formulations (control, conventional comparative, or of the present technology) used in the examples are evaluated against S. *aureus* and/or *P. aeruginosa.* The testing was performed in accordance with the protocols outlined in Chapter 6 of "Official Methods of Analysis" of the Association of Official Analytical Chemists (AOAC) (17th Ed. 1998). More specifically, the protocols involved are AOAC Official Method 955.14 Testing Disinfectants against *Staphylococcus aureus* (§ 6.2.04) and AOAC 964.02 Testing Disinfectants against *Pseudomonas aeruginosa* (§ 6.02.06). The contents of Methods 955.14 and 964.02 and the methods referred to therein (Methods 955.12, 955.14, and 955.14C) are all incorporated herein by reference in their entirety. The testing method is commonly referred to as the AOAC Use-Dilution Method.

The dilutable concentrates are tested in the presence of 400 parts per million (ppm) (as CaCO₃) synthetic hard water and 5% organic soil load.

The efficacy of a biocidal composition according to the Use-Dilution Method can be indicated by the ratio of the number of tested carriers that show growth of the organisms on them over the total number of tested carriers bearing the test organisms that are treated with the test biocidal composition for a pre-selected contact time. For example, a result of "0/60" indicates that the test organisms show growth on zero (0) of the 60 carriers bearing the test organisms that are treated with the tested biocidal composition for the pre-selected contact time (e.g., 10 or 5 minutes). The "0/60" result shows that the growth of the microorganisms has been 100% inhibited. On the other hand, a "2/60" result shows that the organisms grow on two (2) of the 60 tested carriers and the growth inhibition rate is only 96.67%. In the examples, the standard for efficacy of biocidal compositions used are as follows:
Pass EPA efficacy claims: 0/60 or 1/60
Fail EPA efficacy claims: ≥ 2/60

### Example 2: Rapid Screen Assay (RSA) of an Alkaline Biocidal Composition Formulation

To test for the ability of a potentiator system to increase the biocidal efficacy of a biocidal formulation to have a 5 minute microbial contact kill time, a biocidal formulation, comprising 850 ppm of the quat BTC® 1210, which passes the EPA UDT at a 10 minute microbial contact kill time but fails a UDT at 5 minute microbial contact kill time, was used as a basis to add a potentiator system. The original formulation that passes the UDT for 10 minutes but not 5 minutes comprised 850 ppm quat BTC 1210, 117 ppm surfactant, 85 ppm lactic acid, and 390 ppm Versene 100. From this original formulation, the concentrations of the BTC 1210 quat and the surfactant were kept constant, and the concentration of the solvent, chelating agent and pH changed.

The formulations were first tested for stability by incubation overnight at 4°C and 50°C. 16 stable sample formulations were mixed at the percentages by weight of the concentrate shown in Table 1 by adding the components in the following order: distilled water, surfactant Surfonic® L12-6 (available from Huntsman, The Woodlands, TX), quat BTC 1210 (available from Stepan Company, Northfield IL), Versene 100 (Dow, Midland, MI, 39% EDTA), and propylene glycol n-propyl ether (PnP) (Dow, Midland, MI) in the noted amount and mixed by stir bar at room temperature. The concentration of the BTC 1210 at 10.85% and Surfonic® L12-6 at 1.0% based on the total weight of the concentrate were kept constant in all samples.

**Table 1**

| **Std** | **Run** | **Component A: DI Water %** | **Component C: L12-6 %** | **Component D: BTC 1210 %** | **Component B: Versene %** | **Component E: PnP %** | **Response Kill %** |
|---|---|---|---|---|---|---|---|
| 1 | 11 | 69.430 | 1.000 | 13.570 | 8.000 | 8.000 | 84.46 |
| 2 | 9 | 76.430 | 1.000 | 13.570 | 1.000 | 8.000 | 86.08 |
| 3 | 15 | 79.930 | 1.000 | 13.570 | 1.000 | 4.500 | 83.64 |
| 4 | 13 | 72.930 | 1.000 | 13.570 | 4.500 | 8.000 | 86.29 |
| 5 | 8 | 82.930 | 1.000 | 13.570 | 1.250 | 1.250 | 84.14 |
| 6 | 10 | 76.430 | 1.000 | 13.570 | 8.000 | 1.000 | 83.67 |
| 7 | 16 | 72.930 | 1.000 | 13.570 | 8.000 | 4.500 | 82.90 |
| 8 | 14 | 79.930 | 1.000 | 13.570 | 4.500 | 1.000 | 85.32 |
| 9 | 6 | 76.430 | 1.000 | 13.570 | 4.500 | 4.500 | 83.75 |
| 10 | 1 | 76.430 | 1.000 | 13.570 | 6.250 | 2.750 | 85.53 |
| 11 | 5 | 72.930 | 1.000 | 13.570 | 6.250 | 6.250 | 83.15 |
| 12 | 4 | 76.430 | 1.000 | 13.570 | 1.000 | 8.000 | 83.61 |
| 13 | 7 | 83.430 | 1.000 | 13.570 | 1.000 | 1.000 | 80.61 |
| 14 | 3 | 69.430 | 1.000 | 13.570 | 8.000 | 8.000 | 82.99 |
| 15 | 2 | 76.430 | 1.000 | 13.570 | 8.000 | 1.000 | 81.58 |
| 16 | 12 | 79.930 | 1.000 | 13.570 | 1.000 | 4.500 | 85.47 |
| 17 | | 83.430 | 1.000 | 13.570 | 1.000 | 1.000 | 83.67 |

24-48 hour bacterial cell cultures of *Pseudomonas aeruginosa* (about 10⁹ cfu/ml) were diluted 1:10 in Mueller Hinton 2 Broth (BD Biosciences, Sparks, MD) to bring the concentration to about 10⁸ cfu/ml.

The formulations of the test biocidal compositions were diluted 1:128 in 400 ppm hard water (400 ppm CaCO₃) and 5% organic load (Horse serum). Into a 96 well white opaque bottom luminescence mirco plate (Nunc, Thermofisher Scientific, Rochester, NY) 90 µl of this diluted biocidal agent was added to 9 wells and subsequently 10 µl of the diluted *Pseudomonas aeruginosa* (providing a final concentration of about 10⁷ cfu/ml) were added to each well and the timer started. The contents of the wells were mixed at low level for 15 seconds. 3 blanks per sample were prepared by addition of 10 µl of Mueller Broth containing no cells to the three blank wells containing just the biocidal composition to determine background signal of the broth. A sample of untreated control was prepared by adding 10 µl of diluted bacterial stock to 90 µl of 400 ppm hard water without any biocidal composition.

After exactly 5 minutes, 100 µl of room temperature ATP Bioluminescence Dye BacTiter-Glo™ (luciferin/luciferase enzyme/substrate reaction, Promega Corporation, Madison WI) was added to each well and the wells are mixed in the dark at low levels for 15 seconds. The plate is incubated in the dark for 5 minutes, and the 96 well plate is read for Relative Luminescent Units on a Bio-Tek Synergy Luminometer to provide a readout in relative luminescence units (RLU) as shown in Table 2a, 2b and 2c for the samples run in triplicate (blanks) and nine samples (test samples).

**Table 2a: Blank Luminescence reading**

| BLANKS | | | | Average |
|---|---|---|---|---|
| Row 1 | 57 | 50 | 66 | 57.66667 |
| Row 2 | 22 | 15 | 17 | 18 |
| Row 3 | 30 | 37 | 27 | 31.33333 |
| Row 4 | 111 | 91 | 101 | 101 |
| Row 5 | 324 | 265 | 298 | 295.6667 |
| Row 6 | 24 | 13 | 21 | 19.33333 |
| Row 7 | 8 | 15 | 30 | 17.66667 |
| Row 8 | 55 | 65 | 69 | 63 |
| Row 9 | 74 | 91 | 41 | 68.66667 |
| Row 10 | 9 | 7 | 20 | 12 |
| Row 11 | 26 | 22 | 40 | 29.33333 |
| Row 12 | 15 | 25 | 21 | 20.33333 |
| Row 13 | 25 | 8 | 52 | 28.33333 |
| Row 14 | 27 | 33 | 95 | 51.66667 |
| Row 15 | 14 | 13 | 37 | 21.33333 |
| Row 16 | 16 | 7 | 45 | 22.66667 |

**Table 2b: Test Luminescence readings**

| Test Samples | | | | | | | | | |
|---|---|---|---|---|---|---|---|---|---|
| Row 1 | 20025 | 20252 | 20362 | 20709 | 20653 | 20855 | 20516 | 20721 | 20647 |
| Row 2 | 16193 | 16103 | 15793 | 17635 | 15409 | 16461 | 16042 | 14429 | 16792 |
| Row 3 | 19427 | 19473 | 19273 | 19471 | 18844 | 17304 | 17560 | 19709 | 19293 |
| Row 4 | 18452 | 18164 | 18139 | 18772 | 17972 | 18014 | 18463 | 18672 | 18127 |
| Row 5 | 18357 | 19459 | 18726 | 19799 | 19440 | 19045 | 18915 | 19719 | 17719 |
| Row 6 | 18581 | 19526 | 17981 | 18763 | 15569 | 16277 | 18047 | 18955 | 18956 |
| Row 7 | 22686 | 22224 | 20966 | 20101 | 23054 | 20159 | 22650 | 21617 | 20609 |
| Row 8 | 18331 | 18878 | 17659 | 17096 | 17211 | 17761 | 17157 | 17554 | 17405 |
| Row 9 | 12716 | 12257 | 12672 | 12058 | 12292 | 12756 | 12340 | 12618 | 12281 |
| Row 10 | 14725 | 13688 | 15065 | 14530 | 16307 | 14662 | 14086 | 13780 | 13873 |
| Row 11 | 12996 | 13822 | 13649 | 14511 | 14862 | 14456 | 13026 | 14164 | 13098 |
| Row 12 | 13551 | 12508 | 11578 | 12920 | 13511 | 13969 | 13331 | 13090 | 11968 |
| Row 13 | 12289 | 12754 | 12614 | 11583 | 12250 | 11397 | 11614 | 12535 | 12872 |
| Row 14 | 12993 | 12921 | 12974 | 12787 | 12729 | 13311 | 13707 | 12970 | 13547 |
| Row 15 | 15473 | 13677 | 15849 | 13182 | 14623 | 15806 | 14412 | 13249 | 14751 |
| Row 16 | 14312 | 15998 | 14312 | 16696 | 14722 | 14735 | 15367 | 15379 | 15511 |

**Table 2c: calculated results.**

| | Average | Avg-Avg Blank | % kill |
|---|---|---|---|
| Row 1 | 20526.67 | 20469 | 79.531 |
| Row 2 | 16095.22 | 16077.22222 | 83.92278 |
| Row 3 | 18928.22 | 18896.88889 | 81.10311 |
| Row 4 | 18308.33 | 18207.33333 | 81.79267 |
| Row 5 | 19019.89 | 18724.22222 | 81.27578 |
| Row 6 | 18072.78 | 18053.44444 | 81.94656 |
| Row 7 | 21562.89 | 21545.22222 | 78.45478 |
| Row 8 | 17672.44 | 17609.44444 | 82.39056 |
| Row 9 | 12443.33 | 12374.66667 | 84.53167 |
| Row 10 | 14524 | 14512 | 81.86 |
| Row 11 | 13842.67 | 13813.33333 | 82.73333 |
| Row 12 | 12936.22 | 12915.88889 | 83.85514 |
| Row 13 | 12212 | 12183.66667 | 84.77042 |
| Row 14 | 13104.33 | 13052.66667 | 83.68417 |
| Row 15 | 14558 | 14536.66667 | 81.82917 |
| Row 16 | 15225.78 | 15203.11111 | 80.99611 |

Higher relative luminescent units equal higher concentration of ATP and higher number of live cells and thus a lower percent kill. The raw data is saved and for each sample, the 9 test data and 3 blank data are averaged. The following calculations are used to determine a percent kill:
Average untreated control wells- Average of blanks = RLU (untreated)
Averaged sample test wells - Average of blanks = RLU (test sample)
% kill= [1- RLU(test sample)/RLU (untreated)] x 100

The results for the formulations of Table 1 are in the last column of Table 1 and in Table 2c.

### Example 3: Analysis of Alkaline Biocidal Compositions with 5 minute microbial contact kill time

To be able to determine ranges of the concentrations of the components of the biocidal compositions which provide a 5 minute microbial contact kill time, Design-Expert®, version 7 (DX7) software commercially available from Stat-Ease, Inc., Minneapolis, MN was used to analyze the concentrations of the potentiator system tested. The data acquired from the RSA in Example 2 was entered into the DX7 program as shown in Table 3. The program is run to analyze the data using a mixture reduced quadratic model, and provides the graph shown in Fig. 1. The DX7 program also provides an equation to determine the percent kill for specific concentrations of the components:

% kill= 1- [Average RLU of Test Sample - Average RLU of Test Sample Blank] / [Average RLU of DI H2O - Average RLU of DI H2O Blank]
This data can also be displayed by converting the percentage of each component (Versene, PnP, and all else) to a 0-1 scale as shown by the data in Table 4 and then analyzing this data using the DX7 program. The DX7 graph result is shown in Fig. 2. The "hot spot" area depicted by the two inner circles gives the ranges of PnP and Versene which provide a 5 minute kill time.

**Table 3**

| **Std** | **Run** | **Component A: Versene** | **Component B: PnP** | **Component C: All Else** | **Response % Kill** |
|---|---|---|---|---|---|
| 14 | 1 | 0.500 | 0.063 | 0.438 | 81.58 |
| 10 | 2 | 0.391 | 0.172 | 0.438 | 85.53 |
| 5 | 3 | 0.500 | 0.500 | 0.000 | 82.99 |
| 8 | 4 | 0.063 | 0.500 | 0.438 | 83.61 |
| 12 | 5 | 0.500 | 0.500 | 0.000 | 83.15 |
| 7 | 6 | 0.063 | 0.063 | 0.875 | 83.75 |
| 11 | 7 | 0.500 | 0.063 | 0.438 | 80.61 |
| 15 | 8 | 0.063 | 0.500 | 0.438 | 84.14 |
| 13 | 9 | 0.281 | 0.281 | 0.438 | 86.08 |
| 16 | 10 | 0.063 | 0.063 | 0.875 | 83.67 |
| 9 | 11 | 0.391 | 0.391 | 0.219 | 84.46 |
| 6 | 12 | 0.063 | 0.281 | 0.656 | 85.47 |
| 4 | 13 | 0.281 | 0.500 | 0.219 | 86.29 |
| 1 | 14 | 0.281 | 0.063 | 0.656 | 85.32 |
| 2 | 15 | 0.063 | 0.281 | 0.656 | 83.64 |
| 3 | 16 | 0.500 | 0.281 | 0.219 | 82.9 |

**Table 4**

| **Versene %** | **Versene Range 0-1** | **PnP %** | **PnP Range 0-1** |
|---|---|---|---|
| 6.25 | 0.391 | 2.75 | 0.172 |
| 8.00 | 0.500 | 1.00 | 0.063 |
| 8.00 | 0.500 | 8.00 | 0.500 |
| 1.00 | 0.063 | 8.00 | 0.500 |
| 8.00 | 0.500 | 8.00 | 0.500 |
| 1.00 | 0.063 | 1.00 | 0.063 |
| 8.00 | 0.500 | 1.00 | 0.063 |
| 1.00 | 0.063 | 8.00 | 0.500 |
| 4.50 | 0.281 | 4.50 | 0.281 |
| 1.00 | 0.063 | 1.00 | 0.063 |
| 6.25 | 0.391 | 6.25 | 0.391 |
| 1.00 | 0.063 | 4.50 | 0.281 |
| 4.50 | 0.281 | 8.00 | 0.500 |
| 4.50 | 0.281 | 1.00 | 0.063 |
| 1.00 | 0.063 | 4.50 | 0.281 |
| 8.00 | 0.500 | 4.50 | 0.281 |

### Example 4: Formulation and Analysis of a Neutral pH Biocidal Composition with a 5 Minute Microbial Contact Kill Time

To determine a formulation of a neutral pH biocidal composition with a 5 minute microbial contact kill time, 16 formulations of a biocidal composition containing distilled water, surfactant Surfonic® L12-6 (available from Huntsman, The Woodlands, TX), quat BTC 1210 (available from Stepan Company, Northfield IL), Versene (Dow, Midland, MI), propylene glycol n-propyl ether (PnP, Dow, Midland, MI) and lactic acid (Purex) in the noted amounts in Table 5 are prepared and mixed as described in Example 3. Lactic acid was added until the pH of the dilutable concentrate reached the desired pH of 8.5. These formulations were tested by the RSA assay as described in Example 3, and the results are listed in Table 6a, 6b, and 6c.

**Table 5**

| | **DL H₂0** | **L 12-6** | **1210-80%** | **Versene 100** | **PₙP** |
|---|---|---|---|---|---|
| **Row 1** | 72.33 | 1.00 | 13.67 | 4.25 | 8.75 |
| **Row 2** | 78.33 | 1.00 | 13.67 | 3.50 | 3.50 |
| **Row 3** | 73.83 | 1.00 | 13.67 | 3.50 | 8.00 |
| **Row 4** | 71.33 | 1.00 | 13.67 | 3.50 | 10.50 |
| **Row 5** | 78.33 | 1.00 | 13.67 | 3.50 | 3.50 |
| **Row 6** | 73.68 | 1.00 | 13.67 | 4.65 | 7.00 |
| **Row 7** | 77.18 | 1.00 | 13.67 | 4.65 | 3.50 |
| **Row 8** | 78.83 | 1.00 | 13.67 | 3.00 | 3.50 |
| **Row 9** | 77.58 | 1.00 | 13.67 | 4.25 | 3.50 |
| **Row 10** | 76.83 | 1.00 | 13.67 | 5.00 | 3.50 |
| **Row 11** | 71.71 | 1.00 | 13.67 | 4.00 | 9.63 |
| **Row 12** | 75.46 | 1.00 | 13.67 | 4.63 | 5.25 |
| **Row 13** | 74.06 | 1.00 | 13.67 | 4.25 | 7.00 |
| **Row 14** | 73.08 | 1.00 | 13.67 | 3.50 | 8.75 |
| **Row 15** | 76.83 | 1.00 | 13.67 | 5 | 3.5 |
| **Row 16** | 76.21 | 1.00 | 13.67 | 3.875 | 5.25 |
| Lactic Acid to pH = 8.5 | | | | | |

**Table 6a**

| BLANKS | | | | Average |
|---|---|---|---|---|
| Run #1 | 21 | 19 | 46 | 28.66667 |
| Run #2 | 28 | 34 | 55 | 39 |
| Run #3 | 52 | 17 | 55 | 41.33333 |
| Run #4 | 16 | 22 | 53 | 30.33333 |
| Run #5 | 8 | 27 | 52 | 29 |
| Run #6 | 18 | 14 | 27 | 19.66667 |
| Run #7 | 57 | 15 | 35 | 35.66667 |
| Run #8 | 44 | 39 | 81 | 54.66667 |
| Run #9 | 15 | 5 | 47 | 22.33333 |
| Run #10 | 9 | 40 | 21 | 23.33333 |
| Run #11 | 11 | 18 | 25 | 18 |
| Run #12 | 6 | 32 | 39 | 25.66667 |
| Run #13 | 24 | 31 | 46 | 33.66667 |
| Run #14 | 14 | 20 | 36 | 23.33333 |
| Run #15 | 24 | 14 | 36 | 24.66667 |
| Run #16 | 14 | 19 | 38 | 23.66667 |

**Table 6b**

| | | | | | | | | | |
|---|---|---|---|---|---|---|---|---|---|
| Run #1 | 69867 | 69595 | 72207 | 70245 | 67159 | 66342 | 69652 | 74129 | 73310 |
| Run #2 | 68776 | 69351 | 69785 | 71031 | 65964 | 65235 | 66355 | 69157 | 67413 |
| Run #3 | 71036 | 73621 | 73190 | 73158 | 68219 | 62887 | 69561 | 70891 | 67273 |
| Run #4 | 70659 | 70697 | 73352 | 71086 | 69430 | 68107 | 70039 | 73940 | 64076 |
| Run #5 | 72328 | 70374 | 70819 | 75194 | 71349 | 68846 | 68813 | 76921 | 69261 |
| Run #6 | 74656 | 69315 | 71680 | 74146 | 69236 | 68285 | 66736 | 75344 | 71318 |
| Run #7 | 74194 | 64736 | 75568 | 74109 | 69411 | 65937 | 66367 | 73400 | 71664 |
| Run #8 | 70918 | 76150 | 74177 | 74067 | 71832 | 70841 | 67891 | 77436 | 76215 |
| Run #9 | 48202 | 50172 | 45518 | 53469 | 51060 | 49473 | 52336 | 52254 | 46439 |
| Run #10 | 47697 | 48586 | 49611 | 49036 | 47722 | 48749 | 48769 | 45302 | 46911 |
| Run #11 | 46117 | 46300 | 46786 | 45710 | 49106 | 47027 | 47290 | 45305 | 46527 |
| Run #12 | 45022 | 47132 | 46586 | 45992 | 45237 | 47465 | 48733 | 44074 | 48532 |
| Run #13 | 44933 | 47650 | 47953 | 47719 | 51219 | 44090 | 48847 | 45263 | 48699 |
| Run #14 | 43846 | 47306 | 48705 | 45711 | 48605 | 45175 | 49805 | 44545 | 46113 |
| Run #15 | 44774 | 47130 | 45723 | 48734 | 51743 | 48234 | 50731 | 45498 | 46721 |
| Run #16 | 45502 | 45173 | 48896 | 45907 | 55367 | 50113 | 52129 | 49772 | 49389 |

**Table 6c**

| | Avg(test) | Avg(test)-Avq(blank) | % kill |
|---|---|---|---|
| Run #1 | 70278.44 | 70249.78 | 87.81% |
| Run #2 | 68118.56 | 68079.56 | 85.10% |
| Run #3 | 69981.78 | 69940.44 | 87.43% |
| Run #4 | 70154 | 70123.67 | 87.65% |
| Run #5 | 71545 | 71516 | 89.40% |
| Run #6 | 71190.67 | 71171 | 88.96% |
| Run #7 | 70598.44 | 70562.78 | 88.20% |
| Run #8 | 73280.78 | 73226.11 | 91.53% |
| Run #9 | 49880.33 | 49858 | 92.20% |
| Run #10 | 48042.56 | 48019.22 | 88.80% |
| Run #11 | 46685.33 | 46667.33 | 86.30% |
| Run #12 | 46530.33 | 46504.67 | 86.00% |
| Run #13 | 47374.78 | 47341.11 | 87.55% |
| Run #14 | 46645.67 | 46622.33 | 86.22% |
| Run #15 | 47698.67 | 47674 | 88.16% |
| Run #16 | 49138.67 | 49115 | 90.83% |

Using the DX7 program as described in Example 3, the concentrations of Versene, PnP and water were graphed in relation to the percent kill to provide the graph depicted in Fig. 3. The hot spot region is seen as the light circle within the graph. The DX7 program also provides an equation to determine the percent kill for specific concentrations of the components (water representing all other components): % kill= +108.436*Versene100 - 27.52720*PnP + 19.04434*water -14.013*Verseen100*PnP - 10.67*Verseene100*water - 0.909*PnP*water + 1.77*Versene100*PnP*water - 1.44*Versene100*PnP*(Versene100-PnP) + 0.123*PnP*water*(PnP-water)

### Experiment 5: Comparative Study of Disinfectant Efficacy of the Alkaline and Neutral Dilutable Concentrate Formulations

In this example, two dilutable concentrate compositions derived using the RSA method described in Example 2 were studied for their biocidal activities against the gram-positive bacterium *S. aureus* and the gram-negative bacterium P. *aeruginosa* and *S. enterica.* The two compositions both contained 10.9% BTC 1210-80% quat based on the total weight of the dilutable concentrate as the biocidal agent. The formulations were:
Formula QPN: a dilutable concentrate adjusted to a pH of about 8.55; and
Formula QPA: a dilutable concentrate with a pH of about 11.8.
The composition formulations can be found in Table 7 below, where the percentages are per weight of the total dilutable concentrate biocidal composition.

**Table 7**

| Sample | DI Water | Surfactant (L12-6 Sulfonic) | Solvent (Dowanol PnP) | Chelating Agent (Versene 100) | pH buffering agent (Lactic acid) | Quat (BTC 1210-80%) |
|---|---|---|---|---|---|---|
| QPN | 72.5% | 1.0% | 8.5% | 4.0% | 0.5% | 13.5% |
| QPA | 73.0% | 1.0% | 8.5% | 4.0% | 0.0% | 13.5% |

Formulations were stored for 60 days at 25° C and then tested using the 5 min UDT test described in Example 1 at a 1:128 dilution. Results are shown in Table 8:

**Table 8**

| Sample | *S. aureus* | *P. aeruginosa* | *S. enterica* |
|---|---|---|---|
| QPN | 1/59 (pass) | 0/60 (pass) | 0/60 (pass) |
| QPA | 1/59 (pass) | 0/60 (pass) | 1/59 (pass) |

As shown in the Table 8, both the QPN and QPA dilutable concentrates passed a 5 minute kill time for hospital disinfectancy vs. *S. aureus, P. aeruginosa,* and S. *enterica*

### Example 6: Comparison of quat alone, potentiators alone, or combination of potentiators does not provide 5 minute contact kill time

In this example, the individual potentiator components of Formulation QPN and QPA were tested for biocidal disinfectant efficacy individually and in combination using a 5 min UDT vs. *P. aeruginosa,* the most difficult of the three bacteria required for hospital disinfection claims.

The formulations tested were:
Sample 3410-80A Just NonIonic Surfactant
Sample 3410-80B Just EDTA
Sample 3410-80C Just Solvent
Sample 3410-80D Just Acid
Sample 3410-80E EDTA and Solvent without Acid
Sample 3410-80F EDTA and Solvent with Acid
Sample 3410-80G NonIonic Surfactant, EDTA and Solvent without Acid
Sample 3410-80H NonIonic Surfactant, EDTA and Solvent with Acid
Formula QPN: a dilutable concentrate adjusted to a pH of about 8.55; and
Formula QPA: a dilutable concentrate with a pH of about 11.8, the composition of which can be found in Table 9 below, where the percentages are per weight of the total dilutable concentrate biocidal composition.

**Table 9**

| **Sample** | **DI Water** | **Surfactant** | **Solvent** | **Chelating Agent** | **pH buffering agent** | **Quat** |
|---|---|---|---|---|---|---|
| | | **(L12-6 Sulfonic)** | **(PnP)** | **(Versene 100)** | **(Lactic acid)** | **(BTC1210-80%)** |
| #3410-80A | 96.0% | 0.0% | 0.0% | 4.0% | 0.0% | 0.0% |
| #3410-80B | 99.0% | 1.0% | 0.0% | 0.0% | 0.0% | 0.0% |
| #3410-80C | 91.5% | 0.0% | 8.5% | 0.0% | 0.0% | 0.0% |
| #3410-80D | 99.5% | 0.0% | 0.0% | 0.0% | 0.5% | 0.0% |
| #3410-80E | 87.5% | 0.0% | 8.5% | 4.0% | 0.0% | 0.0% |
| #3410-80F | 87.0% | 0.0% | 8.5% | 4.0% | 0.5% | 0.0% |
| #3410-80G | 86.5% | 1.0% | 8.5% | 4.0% | 0.0% | 0.0% |
| #3410-80H | 86.0% | 1.0% | 8.5% | 4.0% | 0.5% | 0.0% |
| #3420-20B | 86.5% | 0.0% | 0.0% | 0.0% | 0.0% | 13.5% |
| QPN | 72.5% | 1.0% | 8.5% | 4.0% | 0.5% | 13.5% |
| QPA | 73.0% | 1.0% | 8.5% | 4.0% | 0.0% | 13.5% |

Formulations were tested using the 5 min UDT test described in Example 1 at a 1:128 dilution in 400 ppm Hard Water as CaCO3 Results are shown in Table 10.

As shown in Table 10, only the QPN and QPA dilutable concentrates passed a 5 minute kill time for hospital disinfectancy vs. *P. aeruginosa.*

**Table 10**

| Sample | *P. aeniginosa (10* tubes) | *P. aeruginosa (60 tubes)* |
|---|---|---|
| **#3410-80A** | 10/10 (fail) | 60/60 (fail) |
| **#3410-80B** | 10/10 (fail) | 60/60 (fail) |
| **#3410-80C** | 10/10 (fail) | 60/60 (fail) |
| **#3410-80D** | 10/10 (fail) | 60/60 (fail) |
| **#3410-80E** | 10/10 (fail) | 60/60 (fail) |
| **#3410-80F** | 10/10 (fail) | 60/60 (fail) |
| **#3410-80G** | 10/10 (fail) | 60/60 (fail) |
| **#3410-80H** | 10/10 (fail) | 60/60 (fail) |
| **#3420-20B** | 2/10 (fail) | 5/60 (fail) |
| **QPN** | 0/10 (pass) | 0/60 (pass) |
| **QPA** | 0/10 (pass) | 0/60 (pass) |

### Example 7: Comparison of Compositions within and outside the "hot spot" for their biocidal efficacy of a 5 minute kill time for P. aeruginosa

In this example, dilutable concentrate compositions derived using the RSA/DX7 method described in Example 2 were studied for their biocidal activities against the gram-negative bacterium *P. aeruginosa.* The compositions contained EDTA and Solvent combinations both inside and outside the "Hot Spot Zone" identified via the RSA/DX7 combination technology.

The formulations tested were:
Control: Deionized Water
Control: Neutral Disinfectant Cleaner with 10 min UDT Disinfectancy Claim
Formula QPN Low:
Formula QPA Low:
Formula QPN:
Formula QPA:
Formula QPN High:
Formula QPA High:
The composition of each of these formulations can be found in Table 11 below, where the percentages are per weight of the total dilutable concentrate of the biocidal composition.

**Table 11**

| Sample | DI Water | Surfactant | Solvent | Chelating Agent (Versene 100) | Acid | Quat |
|---|---|---|---|---|---|---|
| Control: DI Water | 100.0% | 0.0% | 0.0% | 0.0% | 0.0% | 0.0% |
| Control: NDC w/ 10 min UDT Pass | 79.1% | 1.5% | 0.0% | 5.0% | 0.7% | 13.7% |
| Formula QPN Low: | 87.5% | 1.0% | 8.5% | 3.0% | 0.0% | 0.0% |
| Formula QPA Low: | 87.0% | 1.0% | 8.5% | 3.0% | 0.5% | 0.0% |
| Formula QPN: | 72.3% | 1.0% | 8.5% | 4.0% | 0.5% | 13.7% |
| Formula QPA: | 72.8% | 1.0% | 8.5% | 4.0% | 0.0% | 13.7% |
| Formula QPN High: | 84% | 1.0% | 10.0% | 5.0% | 0.0% | 0.0% |
| Formula QPA High: | 83.5% | 1.0% | 10.0% | 5.0% | 0.5% | 0.0% |

Formulation efficacies were compared using the RSA percent kill. The ability of these compositions to pass the UDT test was performed as described in Example 1 for 1:128 dilution. Results are shown in Table 12.

**Table 12**

| Sample | *RSA* % *Kill* | *5 min UDT vs.* |
|---|---|---|
| | | *P. aeruginosa* |
| DI Water | 0.00% | 60/60 |
| Just Quat | 23.39% | 5/60 |
| NDC with 10 min claim | 37.47% | 5/60 |
| QPA Low | 48.12% | 3/60 |
| QPN Low | 46.48% | 2/60 |
| QPA | 53.52% | 0/60 |
| QPN | 58.84% | 0/60 |
| QPA High | 44.67% | 3/60 |
| QPN High | 45.83% | 2/60 |

As shown in the Table 12, only the QPN and QPA dilutable concentrates with concentrations of EDTA and Solvent within the Hot Spot Zone passed a 5 minute kill time for hospital disinfectancy vs. *P. aeruginosa,* Samples outside the Hot Spot zone even with more EDTA and Solvent failed the test.

**Example 8: Stability of Biocidal Compositions to retain biocidal effectiveness**

In this example, dilutable concentrate compositions derived using the RSA/DX7 method described in Example 2 were studied for their biocidal activities against *Pseudomonas aeruginosa* having a 5 minute microbial contact time. The compositions contained solvent and EDTA concentrations inside the "Hot Spot Zone" identified via the RSA/DX7 combination technology as described in the Examples above.

The formulations tested were:
Formula QPN: Ref#3420-31
Formula QPA: Ref#3410-26

The compositions of these formulations can be found in Table 13 below, where the percentages are per weight of the total dilutable concentrate biocidal composition.

**Table 13**

| Sample | DI Water | Surfactant | Solvent | Chelating Agent (Versene 100) | Acid | Quat |
|---|---|---|---|---|---|---|
| Formula QPN: | 72.5% | 1.0% | 8.5% | 4.0% | 0.5% | 13.7% |
| Formula QPA: | 73.0% | 1.0% | 8.5% | 4.0% | 0.0% | 13.7% |

Formulation efficacies were compared using the UDT run by Stepan Test# 16589 and Antimicrobial Test Laboratories Test #. Results are shown in Table 14.

**Table 14**

| Test Agent Name | Lot No. | Contact Times | Log10TCID50/ml Reduction |
|---|---|---|---|
| | | | |
| QPN | 3410-31 | 5 min | 0/60 |
| QPA | 3410-26 | 5 min | 1/60 |

As shown in the Table 14, Both QPN or QPA dilutable concentrates passed the requirements for a 5 min contact time use dilution test vs. the bacterium, *Pseudomonas auruginosa,* even after a stability challenge of 30 day storage at 40°C.

### Example 9: Efficacy of Biocidal Composition as an anti-fungal composition

In this example, dilutable concentrate compositions derived using the RSA/DX7 method described in Example 2 were studied for their biocidal activities against the fungus *Trichophyton mentagrophytes.* The compositions contained solvent and EDTA concentrations inside the "Hot Spot Zone" identified via the RSA/DX7 combination technology.
The formulations tested were:
Formula QPN: Ref#3410-31
Formula QPA: Ref#3410-26

The composition of these formulations can be found in Table 15 below, where the percentages are per weight of the total dilutable concentrate biocidal composition.

**Table 15**

| Sample | DI Water | Surfactant | Solvent | Chelating Agent (Versene 100) | Acid | Quat |
|---|---|---|---|---|---|---|
| Formula QPN: | 72.5% | 1.0% | 8.5% | 4.0% | 0.5% | 13.7% |
| Formula QPA: | 73.0% | 1.0% | 8.5% | 4.0% | 0.0% | 13.7% |

Formulation efficacies were compared using the Fungal UDT run by Microtest Project 123-291. Results are shown in Table 16. Log₁₀ reduction was calculated using the following equation:
Log₁₀ (Virus Recovery Control) - Log₁₀ (Test Results) = Log₁₀ Reduction

**Table 16**

| Test Agent Sample Name | Lot No. | Contact times | Growth/# Test Tubes |
|---|---|---|---|
| QPN | 3392-95 | 5 min | 0/10 |
| | | 10 min | 0/10 |
| QPA | 3392-97 | 5 min | 0/10 |
| | | 10 min | 0/10 |

As shown in the Table 16, both QPN and QPA dilutable concentrates passed the requirements for a 5 min contact time use dilution test using the fungus, *Trichophyton mentagrophytes* as the test biocidal target.

The present technology is now described in such full, clear and concise terms as to enable a person skilled in the art to which it pertains, to practice the same. It is to be understood that the foregoing describes preferred embodiments of the present technology and that modifications may be made therein without departing from the spirit or scope of the present technology as set forth in the appended claims. Further the examples are provided to not be exhaustive but illustrative of several embodiments that fall within the scope of the claims.

## Claims

1. A method of determining an effective amount of a potentiator system for inclusion in a biocidal composition having a microbial contact kill time of 5 minutes or less for at least one microbe comprising the steps of:
providing at least one potentiator system having at least one potentiator agent and at least one carrier agent;
providing at least one biocidal agent;
combining a first concentration of the potentiator system with the biocidal agent to form a first mixture;
separately combining a second concentration of the potentiator system with the biocidal agent to form a second mixture;
quantitatively determining at least one percent kill amount of the first mixture; quantitatively determining at least one percent kill amount of the second mixture;
comparing the percent kill amounts of the first and second mixtures to determine one or more concentrations of the potentiator system to be combined with the biocidal agent to form a biocidal composition effective to provide a microbial contact kill time of about 5 minutes or less for at least one microbial agent.

2. The method of claim 1, wherein the at least one microbe comprises at least one bacterium, virus, fungi, mold, biofilm, dust mite, mycobacterium, protozoa, worm, or combinations thereof.

3. The method of claim 2, wherein the at least one bacterium is *Pseudomonas Aeruginosa.*

4. The method of claim 1, wherein the potentiator agent is a member selected from the group consisting of at least one solvent, pH buffering component, chelating component, surfactant, or combinations thereof.

5. The method of claim 1, wherein the sufficient contact kill time is about 1 minute or less.

6. The method of claim 1, wherein the biocidal agent is at least one member selected from the group consisting of alkyl dimethyl benzyl ammonium chloride (ABDAC); dialkyldimethyl ammonium chloride (DDAC); n-alkyl dimethyl benzyl ammonium chloride; alkyl dimethyl benzyl ammonium saccharinate; and combinations thereof.

7. The method of claim 1, wherein the carrier agent is at least one member selected from the group consisting of water, glycerol, and alcohol.

8. The method of claim 1, wherein the biocidal composition further comprises at least one additive.

9. The method of claim 8, wherein the additive is at least one member selected from the group consisting of dyes, fragrances or preservatives.

10. The method of claim 1, wherein the combination of the concentration of the potentiator system and the biocidal agent results in a biocidal composition providing a synergistic biocidal efficacy.
